# EUROPÄISCHE PATENTSCHRIFT

(11) **EP 3 735 871 B1**
(45) Veröffentlichungstag und Bekanntmachung des Hinweises auf die Patenterteilung: **03.07.2024**
(21) Anmeldenummer: 19173560.4
(22) Anmeldetag: 09.05.2019
(51) Int. Cl.: A47J 9/00, A47G 19/26, A47J 17/02

(54) **BUTTERSCHÄLER UND BUTTERDOSENSYSTEM**
BUTTER SHAVER AND BUTTER CONTAINER SYSTEM
ÉPLUCHEUR À BEURRE ET SYSTÈME DE CONTENEUR POUR LE BEURRE

(43) Veröffentlichungstag der Anmeldung: 11.11.2020
(73) Patentinhaber: butter-leaf GmbH, 6600 Breitenwang (AT)
(72) Erfinder: Iljazovic, Martin, 6600 Breitenwang (AT)
(74) Vertreter: Vossius & Partner Patentanwälte Rechtsanwälte mbB

(56) Entgegenhaltungen:
- WO-A1-2008/087462
- DE-U1- 29 712 318
- US-A- 1 533 445
- US-A1- 2005 262 703
- US-A1- 2010 000 423
- US-B1- 8 960 441

## Beschreibung

Die vorliegende Erfindung betrifft einen Butterschäler und ein Butterdosensystem.

Butter ist für viele Menschen ein essentieller Bestandteil ihrer Ernährung, insbesondere beim Frühstück. Die Nutzung von Butter ist jedoch mit erheblichen Schwierigkeiten verbunden. Üblicherweise wird Butter im Kühlschrank gelagert. Dadurch hat Butter eine sehr harte Konsistenz, wodurch deren Portionierung und Verteilung schwierig ist. Insbesondere ein Verstreichen von harter Butter auf einem weichen Gebäck ist kaum möglich und kann zu einem unerwünschten Reißen beispielsweise einer Brotscheibe oder eines Brötchens führen.

Um die Portionierung und Verteilung von Butter zu erleichtern, kann deshalb wärmere Butter verwendet werden. Dabei muss jedoch in nachteiliger Weise bei im Kühlschrank gelagerter Butter auf deren Aufwärmen gewartet werden. Gerade bei einem schnellen Frühstück vor Arbeitsbeginn kann diese Zeit nicht zur Verfügung stehen. Zudem wird warme Butter schmierig, was wiederum deren Portionierung erschweren kann. Von vielen Menschen wird zudem der Geschmack, von kühler, erfrischender Butter gegenüber warmer, weicher Butter bevorzugt. Die Erwärmung von Butter ist zudem mit Nachteilen bezüglich deren Haltbarkeit verbunden. Die zwischenzeitlich stärker erwärmte Oberfläche von Butter kann sich geschmacklich verändern und insbesondere ranzig werden. Auch bei einer Lagerung außerhalb eines Kühlschranks wird Butter schnell verderben, womit dies zu vermeiden ist.

In der CA 2 528 297 ist ein kombinierter Butterschneider und Verteiler beschrieben. Dieser weist einen Griff auf sowie eine feststehende Klinge und ein sich daran anschließenden Butterverteilpart. Damit kann Butter von einem Butterstück abgeschabt werden. Ein Durchlass oberhalb der Klinge in dem Butterverteilpart kann sich dabei jedoch schnell zusetzen. Zudem sind die Schneidergebnisse dieser Vorrichtung bei ungleichmäßig geformter Butteroberfläche unbefriedigend. Auch ist die Handhabung unbefriedigend.

In der US 2,814,113 ist ein Butterhalter mit Guillotinen-artiger Schnittvorrichtung beschrieben. In der US 1,533,445 ein Butterschneider mit drahtförmigem Schneidelement. Beide Vorrichtungen sind komplex, unhandlich und führen zu unbefriedigenden Schnittergebnissen. WO 2008/087462 A1 offenbart einen Gemüseschäler mit einem Griff, der einen gabelförmigen Halteabschnitt aufweist. Der Gemüseschäler umfasst eine Schwenkeinheit mit einer Stange, an der eine Klinge ausgebildet ist. Die Stange ist an Scharnieren in dem gabelförmigen Halteabschnitt gelagert. Die Klinge weist außerdem einen gekrümmten Abgabeabschnitt auf, um die Schalen von dem Schäler besser abzuführen.

Aufgabe der vorliegenden Erfindung ist es, die Nachteile des Standes der Technik zu überwinden oder zumindest eine alternative bereitzustellen und insbesondere, das Portionieren und Verteilen von Butter zu erleichtern.

Diese Aufgabe wird durch die Gegenstände der unabhängigen Patentansprüche gelöst. Vorteilhafte Ausgestaltungen mit zweckmäßigen Weiterbildungen der Erfindung sind in den jeweiligen Unteransprüchen angegeben.

Ein erster Aspekt der Erfindung betrifft einen Butterschäler mit einem Griffelement und einem an dem Griffelement schwenkbar gelagerten Klingenelement. Im Gegensatz zu einer feststehenden Klinge erleichtert das verschwenkbare Klingenelement das Abschälen von Butter. Insbesondere wird so das Abtrennen eines langen, ununterbrochenen Butterspans ermöglicht. Auch ist die Nutzung bei einer unebenen Butteroberfläche wesentlich erleichtert. Das Klingenelement kann einen im Wesentlichen flachen Bereich mit wenigstens einer Schnittkante aufweisen. Mit der Schnittkante kann das Klingenelement in die Butter eintauchen und von dieser einen Span bzw. eine Scheibe abtrennen. Der flache Bereich kann beispielsweise eine Blechstruktur sein, welche an einer Vorderkante die Schnittkante ausbildet und auf welchem sich die abgetrennte Butter bzw. der abgeschnittene Butterspan ablegen kann. Die Blechstruktur kann beispielsweise ein im Wesentlichen flaches und dünnes Blech, vorzugsweise ein Edelstahlblech, sein.

Weiterhin kann der Butterschäler wenigstens ein vorzugsweise an dem Klingenelement gelagertes Führungselement aufweisen, bevorzugt ein dreh- oder schwenkbar gelagertes Führungselement. Bevorzugt ist das Führungselement zu der Schnittkante des Klingenelements beabstandet ist. Der Butterschäler kann dazu ausgebildet sein, mit dem Führungselement auf einem Butterstück anliegend und mit der Schnittkante in Zugrichtung weisend über das Butterstück gezogen zu werden und dabei mit dem Klingenelement in das Butterstück einzutauchen, um so eine Butterscheibe von dem Butterstück abzuschälen. Das Führungselement kann dabei das Abschälen einer gleichmäßig dicken und langen Butterscheibe erleichtern. Zudem kann das Führungselement ein Verschmutzen des Griffelements mit Butter und/oder ein ungewolltes Berühren der Butter mit der Hand verhindern.

Der Butterschäler mit Führungselement und Klingenelement kann dabei nach Art eines Gemüseschälers bzw. Pendelschälers ausgebildet sein. Dabei können jedoch jeweilige Geometrien, insbesondere Breite der Schnittkante, eine Auflagefläche des Führungselements und/oder eine Erstreckung und/oder Form des flachen Bereichs und/oder anderer Bereiche des Klingenelements angepasst sein, insbesondere an die üblichen Abmessungen von Butterstücken in jeweiligen Ländern.

Eine Flachseite, bevorzugt beide Flachseiten, des Klingenelements kann bzw. können eine aufgeraute Oberfläche aufweisen, welche insbesondere gegenüber einer glatten und/oder blanken, insbesondere blankpolierten Oberfläche ein Anhaften von Butter reduzieren kann und/oder den Schneidwiderstand beim Abtrennen eines Butterstücks reduzieren kann. Dadurch wird das Abschälen von Butter und damit dessen Portionierung und Verteilung wesentlich erleichtert. Generell hat Butter die Eigenschaft, bei Anhaften an einer Oberfläche und darauf ausgeübter Kraft ihre Form durch Schmierung zu verändern. Bei einem Butterschäler kann somit beispielsweise ein abgetrennter Span aufgestaut werden. Damit setzt sich zum einen der Schneidmechanismus zu. Zum anderen wird bei einem solchen Anhaften so keine Butterscheibe mit gleichmäßiger Dicke erzeugt, sondern vielmehr ein Butterklumpen. Bei dem Butterschäler mit aufgerauter Oberfläche des Klingenelements kann also vorteilhafterweise eine gleichmäßig geformte Butterscheibe ohne Zusetzen des Schnittmechanismus abgeschält werden. Diese Butterscheibe kann dann dazu geeignet sein, ohne weiteres Verteilen auf einer Brotscheibe abgelegt zu werden. So kann der Benutzer einfach in den Genuss eines Brotes mit harter, kalter Butter kommen, ohne dass ein mühsames Verstreichen der Butter notwendig ist, bei welchem zudem ein Reißen der Brotscheibe droht. Vorteilhafterweise ist die Butterscheibe beim Abschälen so dick bzw. dünn, dass eine Dickenreduktion durch Verstreichen auch nicht notwendig ist. Dafür kann ein entsprechender Versatz zwischen Führungselement und Schnittkante vorgesehen sein.

Die aufgeraute Oberfläche kann durch eine Oberflächenbehandlung, wie ein Walzen, Bürsten, Ätzen, Prägen, und/oder Strahlen, eingestellt bzw. aufgeraut werden. Bevorzugt wird ein Sandstrahlen oder ein Glasperlenstrahlen genutzt. Die Oberflächenbehandlung kann beispielsweise nach Herstellen der Grundform des Klingenelements, beispielsweise durch ein Ausstanzen des Klingenelements aus einem Blech, durchgeführt werden. Dadurch können auch jeweilige Kanten des Klingenelements entgratet werden. Die Fertigung ist so sehr kostengünstig. Die Oberflächenbehandlung wird bevorzugt vor einem Schleifen der Schnittkante durchgeführt, um deren Schärfe nicht zu beeinträchtigen. Eine Schlifffacette der Schnittkante kann dann beispielsweise blank sein. Alternativ kann die Oberflächenbehandlung auch nach einem Schliff der Schnittkante durchgeführt werden, um auch eine Schlifffacette mit einer aufgerauten Oberfläche zu versehen. Bei Verwendung eines an sich sehr rauen Materials, wie zum Beispiel bei Gusseisens, kann dieses aber auch für eine gewünschte, aufgeraute Oberfläche geglättet werden, beispielsweise durch eine Politur. Die aufgeraute Oberfläche kann aber auch durch eine Oberflächenbeschichtung vorgegeben werden, beispielsweise durch eine Lackschicht, insbesondere eine grobkörnige Lackschicht, eine metallische Ablagerung bzw. Beschichtung, und/oder eine Gummierung.

Ist nur eine Flachseite aufgeraut, ist dies bevorzugt die vom Butterstück bei dessen Schälen abgewandte Seite. Über diese Seite gleitet die abgeschälte Butterscheibe, so dass deren Anhaften und insbesondere Verformen vermieden werden kann.

Ebenso kann die Auflagefläche des Führungselements, welche beim Schneiden bzw. Schälen dem Butterstück zugewandt ist und/oder auf diesem aufliegt, eine aufgeraute Oberfläche aufweisen. Dadurch kann generell die für den Schnittvorgang bzw. Schälvorgang notwendige Kraft reduziert und die Führung des Butterschälers vereinfacht werden. Ein Gleiten über die Butter kann erleichtert werden. Die aufgeraute Oberfläche an dem Führungselement ist besonders vorteilhaft, falls das Führungselement eine Rolle ist und/oder metallisch ist. Alternativ kann die Oberfläche des Führungselements aber auch glatt sein. Die gewünschte Oberflächenstruktur kann vorzugsweise auch mittels einer Beschichtung erreicht werden.

Die Flachseiten des Klingenelements können als eine Oberfläche auf einer Seite des flachen Bereichs definiert sein. Insbesondere kann eine jeweilige Flachseite also eine Oberfläche entlang der Haupterstreckung des flachen Bereichs des Klingenelements ausgebildet sein. Das Klingenelement kann im Wesentlichen aus dem flachen Bereich bestehen, wobei jeweilige Lagerbereiche quer zum flachen Bereich ausgebildet sein können. Zudem kann die Schnittkante eine gewisse Neigung gegenüber dem flachen Bereich aufweisen. Insbesondere kann sich unmittelbar an die Schnittkante ein geneigter Bereich anschließen, vorzugsweise um eine zu dem flachen Bereich geneigte Schnittkante vorzusehen. Dieser kann vorliegend trotzdem zum flachen Bereich gezählt werden und/oder eine aufgeraute Oberfläche aufweisen. Der flache Bereich muss also nicht komplett eben sein, kann es aber sein. Der flache Bereich, insbesondere dessen aufgeraute Oberfläche, ist bevorzugt im Wesentlichen mindestens genauso breit wie die Schnittkante. Dadurch kann über die gesamte Schnittbreite ein Anhaften von Butter vermieden werden.

Das Führungselement ist bevorzugt parallel zur Schnittkante angeordnet und/oder zur Schnittkante des Klingenelements beabstandet, vorzugsweise in Richtung quer, insbesondere orthogonal, zur Schnittkante des Klingenelements. Die Schnittkante kann insbesondere an einem End- bzw. Seitenbereich des Klingenelements ausgebildet sein. Der Endbereich bzw. die Schnittkante ist vorzugsweise in Zugrichtung für das Butterschälen weisend angeordnet.

Das Griffelement kann beispielsweise einen länglichen Haltebereich zum Halten des Butterschälers durch eine Person aufweisen. Entsprechend kann das Griffelement eine Längsachse aufweisen, welche zu einer Längserstreckung des Haltebereichs korrespondiert. Der Haltebereich kann beispielsweise als runder und/oder stabförmiger Bereich ausgebildet sein. An den Haltebereich kann sich ein Befestigungsbereich für das Klingenelement und/oder das Führungselement anschließen. Der Befestigungsbereich kann insbesondere durch eine Befestigungsgabel gebildet sein, zwischen deren zwei Armen das Klingenelement und/oder das Führungselement angeordnet sind. Eine Schwenkachse des Klingenelements kann sich von einem der Arme zu dem anderen der Arme des Befestigungsbereichs erstrecken, und/oder vorzugsweise im Wesentlichen senkrecht zur Längsachse des Haltebereichs. Ebenso kann sich eine Befestigungsachse des Führungselements von einem der Arme zu dem anderen der Arme des Befestigungsbereichs erstrecken, insbesondere in einer bestimmten Schwenkposition des Klingenelements. Bevorzugt ist dies die Schwenkposition des Klingenelements, bei welchem der flache Bereich im Wesentlichen parallel zur Längsachse des Griffelements ausgerichtet ist. Auch das Führungselement kann schwenkbar befestigt sein oder auch drehbar, insbesondere entlang dessen Befestigungsachse. Das Führungselement kann also auch schwenkbar an dem Griffelement gelagert sein, beispielsweise mittelbar durch eine Verbindung zu dem Klingenelement. So können Klingenelement und Führungselement gemeinsam synchron schwenken. Auch dies kann das Butterschneiden bzw. -schälen vereinfachen.

Der Butterschäler ist bevorzugt so ausgebildet, dass die abgeschälte Butterscheibe auf einer Oberseite des flachen Bereichs des Klingenelements zum Liegen kommt und/oder dort auf dem Klingenelement beim Schälen abgleitet. Insbesondere kann der Butterschäler bzw. das Klingenelement so ausgebildet sein, dass die Butterscheibe nach Beendigung des Schälvorgangs auf dem Klingenelement zumindest teilweise aufliegt. So kann die Butterscheibe einfach mit dem Klingenelement zu einer Brotscheibe transportiert und/oder darauf abgelegt werden.

In weiterer vorteilhafter Ausgestaltung des Butterschälers ist es vorgesehen, dass das Klingenelement aus einem metallischen Werkstoff gebildet ist, insbesondere aus Stahl. Ein solches Klingenelement ist robust, leicht zu reinigen und vorzugsweise korrosionsbeständig. Bevorzugt wird Edelstahl als Werkstoff eingesetzt. Insbesondere kann das Klingenelement aus einem Edelstahlblech gebildet sein. Bevorzugt ist das Klingenelement aus einem Edelstahlblech gelasert und/oder gestanzt. Die Schnittkante kann separat geschärft sein, beispielsweise durch ein Schleifen. Die Schnittkante kann so besonders scharf und das Butterschälen besonders einfach sein. Die Schnittkante kann aber auch einfach eine Stanzkante eines Edelstahlblechs ohne zusätzliches Schärfen sein. Der Butterschäler ist so besonders kostengünstig.

In weiterer vorteilhafter Ausgestaltung des Butterschälers ist es vorgesehen, dass die jeweilige Oberfläche wenigstens einer der Flachseiten des Klingenelements, insbesondere die Oberfläche der Flachseite mit der aufgerauten Oberfläche, im Wesentlichen frei von metallisch blanken und/oder spiegelnden Bereichen ist. Im Wesentlichen kann hier als wenigstens 80% der Oberfläche definiert sein, bevorzugt wenigstens 90%, besonders bevorzugt wenigsten 95%. Die Oberfläche kann aber auch komplett frei von metallisch blanken und/oder spiegelnden Bereichen sein. Insgesamt kann so ein ungewolltes Anhaften von Butter besonders gut vermieden werden.

In weiterer vorteilhafter Ausgestaltung des Butterschälers ist es vorgesehen, dass eine Oberflächenrauhigkeit der aufgerauten Oberfläche des Klingenelements einen Rauhigkeitswert Rₐ von 0,3 oder mehr hat, bevorzugt wenigstens 0,5, besonders bevorzugt wenigstens 0,8. Experimentelle Versuche haben gezeigt, dass ab einer solchen Oberflächenrauhigkeit ein Anhaften von Butter besonders gut und insbesondere in einem weiten Konsistenzbereich der Butter vermieden werden kann. Die Konsistenz von Butter ist dabei unter anderem temperaturabhängig. Entsprechend kann die Butter über einen langen Zeitraum nach Entnahme aus dem Kühlschrank zuverlässig geschält werden. Beispielsweise zeigt ein mit Glasperlen gestrahltes Edelstahlblech mit Rₐ von 0,87 gegenüber einem unbehandelten Edelstahlblech mit Rₐ von 0,1 bis 0,15 ein wesentlich geringeres Anhaftverhalten. Ein Edelstahlblech, welches mit Glasperlen sandgestrahlt wurde und den Rₐ von 0,87 aufweist, kann eine einer matten Oberfläche ähnlich aussehende Oberfläche aufweisen und eine geringe fühlbare Rauigkeit haben. Eine solche Oberfläche wirkt sehr hochwertig und ist zudem besonders einfach zu reinigen. Ein sehr gutes Vermeiden der Anhaftung von Butter kann mit einem Rₐ von mehr als 2, insbesondere mehr als 2,5 erzielt werden. Beispielsweise hat eine 3D-gedruckte Klinge aus Titanium, welche mit Sandstrahlen nachbehandelt wurde, einen Rₐ von 2,7 und hervorragende Schnitteigenschaften. Ebenfalls gut funktionierende Klingenelemente können ein mit feinem Edelkorund gestrahltes Edelstahlblech nutzen (Rₐ von 2,6). Ein mit grobem Edelkorund gestrahltes Edelstahlblech (Rₐ von 7) ist dagegen bereits weniger vorteilhaft, da es sich ähnlich zu Schleifpapier verhält und ein Küchentuch beim Abwischen bereits hängen bleiben könnte. Bevorzugt hat die Oberflächenrauhigkeit der aufgerauten Oberfläche des Klingenelements einen Rauhigkeitswert Rₐ von höchstens 7 oder weniger, bevorzugt weniger als 5, besonders bevorzugt weniger als 3. Dadurch wird weiterhin eine hygienische und leicht zu reinigende Oberfläche bereitgestellt. Zudem wirkt eine solche Oberfläche für den Betrachter noch glatt und hochwertig. Der Rauhigkeitswert kann vorteilhaft durch die Fertigung des Klingenelements eingestellt werden, insbesondere durch eine Blechbehandlung. Beispielsweise kann ein Edelstahlblech hierfür gestrahlt werden, insbesondere gesandstrahlt und/oder mit Glasperlen gestrahlt. Vorteilhaft ist beispielsweise auch die Rauigkeit eines im metallischen 3D-Druck hergestellten Klingenelements.

In weiterer vorteilhafter Ausgestaltung des Butterschälers ist es vorgesehen, dass die aufgeraute Oberfläche des Klingenelements durch eine strukturierte Oberfläche mit jeweiligen Vorsprüngen und/oder Vertiefungen gebildet ist. Bei den Vorsprüngen und/oder Vertiefungen kann es sich insbesondere um eine Makrostruktur handeln. Insbesondere können jeweilige einzelne Vorsprünge und/oder Vertiefungen so groß ausgebildet sein, dass diese mit dem bloßen Auge einzeln erkennbar sind. Die Oberfläche kann so jeweiligen standardisierten Metalloberflächen entsprechen, beispielsweise einem Metallblech mit Ledemarben, Leinenoberfläche, Rauten, Karos, Tränen, und/oder Schachbrettmuster. Die Oberflächenstruktur kann beispielsweise gestrahlt, geprägt, mustergewalzt und/oder im 3D-Druck eingebracht sein. Die strukturierte Oberfläche kann alternativ oder zusätzlich zur vorgenannten Oberflächenrauhigkeit als aufgeraute Oberfläche definiert sein. Die Oberflächenausführung kann beispielsweise der Norm DIN EN 10088-2 für rostfreien Edelstahl entsprechen. Bevorzugt ist diese eine Sonderausführung gemustert oder gewellt, beispielsweise klassifiziert nach Kurzzeichen 1M, 2M oder 2W.

Die Oberfläche kann als Struktur erhöhte und vertiefte Bereiche aufweise, wobei die erhöhten Bereiche oberhalb/außerhalb einer sich parallel zur Oberfläche erstreckenden Oberflächenebene liegen und die vertieften Bereiche unterhalb dieser Ebene liegen. Die Ebene kann als Mittelebene definiert sein oder als Ebene, in welchem sich der größte Anteil der Oberfläche erstreckt. Bevorzugt weist die Oberfläche wenigstens 20% erhöhte Bereiche auf, besonders bevorzugt wenigstens 30% erhöhte Bereiche, nochmals bevorzugt wenigstens 50% erhöhte Bereich. Alternativ oder zusätzlich weist die Oberfläche wenigstens 20% vertiefte Bereiche auf, besonders bevorzugt wenigstens 30% vertiefte Bereiche, nochmals bevorzugt wenigstens 50% vertiefte Bereich. Auch diese Gestaltung des Klingenelements kann ein Anhaften von Butter zuverlässig vermeiden. Die jeweiligen Erhöhungen und/oder die Vertiefungen können beispielsweise bis zu 0,01mm von der Oberflächenebene an deren höchster bzw. tiefster Stelle beabstandet sein, bevorzugt bis zu 0,05mm, besonders bevorzugt bis zu 0,1mm.

Bevorzugt ist die Auflagefläche des Führungselements gemäß einer oder mehreren der oben genannten Gestaltungsmöglichkeiten der Oberfläche des Klingenelements ausgebildet, um dort ebenfalls ein Anhaften von Butter zu vermeiden. Insbesondere kann der Butterschäler so leichter über die Butter gezogen werden.

In weiterer vorteilhafter Ausgestaltung des Butterschälers ist es vorgesehen, dass das Griffelement und/oder das Führungselement aus wenigstens einem Kunststoff gebildet sind. Dadurch können diese Teile leicht, robust und einfach zu reinigen sein. Bevorzugt können diese Teile auch aus einem oder mehreren Kunststoffen bestehen. Insbesondere kann es sich um kostengünstige Spritzgussteile handeln. Alternativ oder zusätzlich können das Griffelement und/oder das Führungselement eine Silikonoberfläche aufweisen. Dies ist insbesondere aus Hygienegründen vorteilhaft und kann auch die Anhaftung von Butter reduzieren. Dafür können diese Teile beispielsweise eine Silikonhülle aufweisen.

In weiterer vorteilhafter Ausgestaltung des Butterschälers ist es vorgesehen, dass das Führungselement als Rolle ausgebildet ist, die um ihre Mittelachse drehbar an dem Klingenelement gelagert ist und dazu ausgebildet ist, beim Schälen des Butterstücks mit einer Mantelfläche der Rolle auf dem Butterstück anzuliegen. Vorzugsweise ist das Führungselement in Zugrichtung vor der Schnittkante an dem Klingenelement angeordnet, insbesondere gelagert an einem zu dem flachen Bereich quer, insbesondere orthogonal, ausgerichtetem Bereich des Klingenelements. Dadurch kann das Führungselement auf der Butter anliegen und das Führungselement zum Führen beim Ziehen des Butterschälers bzw. beim Schälen der Butter auf der Butter abrollen. Dadurch ist die Zugkraft zum Schälen besonders gering, wodurch die Portionierung bzw. das Abschälen von Butter besonders einfach ist. Die Mittelachse des Führungselements kann sich insbesondere quer, bevorzugt orthogonal, zu einer Längsachse des Griffelements erstrecken. Die Mittelachse kann zur Längsachse der Rolle korrespondieren und auch als Drehachse bezeichnet werden. Bevorzugt ist die Mittelachse von der Schnittkante und/oder der Lagerachse des Klingenelements beabstandet. Die Mittelachse des Führungselements bzw. der Rolle und die Lagerachse des Klingenelements können im Wesentlichen parallel zueinander angeordnet sein. Die Rolle bzw. das Führungselement können so ausgebildet sein, dass die Rolle beim Ziehen des Butterschälers über das Butterstück zum Abschälen der Butterscheibe an der Butter abrollt. Ein Durchmesser der Rolle kann beispielsweise 6 bis 14 mm betragen, bevorzugt 8 bis 12mm, besonders bevorzugt ca. 9,6mm. Ein solcher Durchmesser erlaubt auch bei weicher bzw. warmer Butter noch ein gutes Abrollen darauf.

In weiterer vorteilhafter Ausgestaltung des Butterschälers ist es vorgesehen, dass die Mittelachse im Wesentlichen parallel zu der Schnittkante des Klingenelements ist. Entsprechend kann sich die Mittelachse quer, insbesondere orthogonal, zum Griff bzw. zur Längsachse des Griffelements erstrecken. Die Handhabung des Butterschälers ist so besonders intuitiv und einfach.

In weiterer vorteilhafter Ausgestaltung des Butterschälers ist es vorgesehen, dass die Mantelfläche der Rolle jeweilige Vorsprünge und/oder Vertiefungen aufweist, mittels welcher ein Muster in die Butterscheibe bei deren Abschälen von dem Butterstück einprägbar ist. Insbesondere kann das Einprägen durch Abrollen an dem Butterstück bei dem Schälvorgang erfolgen. Eine solche Rolle kann auch als Logorolle bezeichnet werden. Insbesondere können die Vorsprünge und/oder Vertiefungen Wörter und/oder ein Logo bilden, insbesondere abgewickelt von der Rolle, um so entsprechend ein Logo oder Wörter in die Butterscheibe einprägen zu können. Dadurch kann der Butterschäler individualisiert werden und/oder zum Marketing genutzt werden. Vorteilhafterweise ist das Führungselement bzw. die Rolle austauschbar ausgebildet. Dadurch kann nachträglich eine Individualisierung erfolgen und/oder ein unbewegliches Führungselement durch eine Rolle ausgetauscht werden. Alternativ oder zusätzlich kann die Rolle einen austauschbaren Mantel und/oder eine austauschbare Hülle aufweisen. Beispielsweise kann ein Silikonmantel mit glatter Mantelfläche gegen einen Silikonmantel mit Vorsprüngen getauscht werden. Die Vertiefungen und/oder Vorsprünge auf der Mantelfläche der Rolle verbessern zudem deren Abrollverhalten auf der Butter. So kann ein ungewünschtes Anhaften noch besser vermieden werden. Insbesondere kann so auch bei warmer Butter ein Anhaften und Aufstauen an der Rolle reduziert werden, sodass der Butterschäler bei einem größeren Buttertemperaturbereich bzw. für einen längeren Zeitraum nach Entnahme der Butter aus dem Kühlschrank eingesetzt werden kann.

In weiterer vorteilhafter Ausgestaltung des Butterschälers ist es vorgesehen, dass das Klingenelement beidseitig an entlang der Schnittkante gegenüberliegenden Enden einen aufgebogenen Bereich aufweist. Dabei kann es sich beispielsweise um einen Ösenbereich handeln. Dieser aufgebogene Bereich kann als Seitenführung beim Butterschälen dienen. Bevorzugt bildet der aufgebogene Bereich jedoch alternativ oder zusätzlich eine Lagerstelle des Klingenelements an dem Griffelement. Beispielsweise kann eine Durchgangsöffnung in diesem Bereich an einem jeweiligen Zapfen des Griffelements drehbar gelagert sein. Der jeweilige aufgebogene Bereich kann einen Winkel zur restlichen im Wesentlichen flachen Erstreckung des Klingenelements bilden, insbesondere einen rechten Winkel. Jeweilige aufgebogene Bereiche können sich jeweils an den flachen Bereich anschließen.

Zusätzlich oder alternativ kann in dem flachen Bereich des Klingenelements eine Vertiefung oder ein Vorsprung quer, insbesondere orthogonal zur Schnittkante, ausgebildet sein, welcher den flachen Bereich des Klingenelements gegen Knicken und/oder Verbiegen schützt, insbesondere aufgrund von Anpressen an der Butter. Dies kann beispielsweise als Sicke ausgebildet sein.

In weiterer vorteilhafter Ausgestaltung des Butterschälers ist es vorgesehen, dass die jeweiligen aufgebogenen Bereiche einen Teil der Lagerung des Klingenelements an dem Griffelement und/oder einen Anschlag zum Begrenzen der Schwenkbewegung des Klingenelements bilden. Ein Anschlag zum Begrenzen der Schwenkbewegung des Klingenelements kann einen zu steilen Eintauchwinkel beim Ansetzen an der Butter zum Schälen vermeiden und/oder ein Bewegen des Klingenelements derart, dass Butter mit einer Hand des Nutzers ungewollt in Berührung kommt.

In weiterer vorteilhafter Ausgestaltung des Butterschälers ist es vorgesehen, dass das Klingenelement und das Führungselement so angeordnet sind, dass beim Schälen des Butterstücks der flache Bereich des Klingenelements im Wesentlichen parallel zu der Oberfläche des Butterstücks ausgerichtet ist, auf welcher das Führungselement anliegt, und/oder parallel zu einer auf der Oberfläche des Butterstücks aufliegenden Oberfläche des Führungselements. Abweichungen von bis zu 25°, bevorzugt bis zu 20°, besonders bevorzugt bis zu 17° sind dabei beispielsweise zulässig Dafür können entsprechend die Auflagefläche des Führungselements und der flache Bereich des Klingenelements parallel zueinander angeordnet sein. Für diese Ausrichtung kann ein entsprechender Anschlag an dem Griffelement für das Klingenelement und/oder das Führungselement vorgesehen sein. Beim initialen Eintauchen des Klingenelements in das Butterstück kann das Klingenelement schräg zur der Butteroberfläche ausgerichtet sein. Danach kann sich das Klingenelement selbstständig beim Abschälen der Butter in eine Position parallel dazu ziehen. Dafür können insbesondere das Klingenelement und das Führungselement beabstandet sein. Entsprechend kann auch die aufgeraute Oberfläche parallel beim Schälen zu der Oberfläche des Butterstücks angeordnet sein.

In weiterer vorteilhafter Ausgestaltung des Butterschälers ist es vorgesehen, dass die Schnittkante des Klingenelements im Wesentlichen parallel zur Schwenkachse des Klingenelements ausgerichtet ist und/oder die Schnittkante des Klingenelements zu der Schwenkachse des Klingenelements beabstandet angeordnet ist. Der Abstand der Schnittkante zu der Schwenkachse kann beispielsweise 1mm bis 4mm beatragen, bevorzugt ca. 2mm. So wird ein einfaches Eintauchen aber auch ein gleichmäßiges Butterschälen vereinfacht. Beim Schälen des Butterstücks liegen Schnittkante und Schwenkachse bevorzugt nicht in einer Ebene parallel zur Oberfläche des Butterstücks, an der das Führungselement anliegt. Eine Breite der Schnittkante, also deren Längserstreckung, ist bevorzugt wenigstens so breit wie ein übliches standardisiertes Butterstück eines Landes. In Deutschlang sollte ein Butterstück an seiner schmalsten bzw. kürzesten Kante beispielsweise 35mm breit bzw. lang sein, wobei fertigungsbedingt eine Breite von 34 bis 38mm üblich ist. Beispielsweise sollte die Schnittkante zum Schälen eines solchen Butterstücks 40mm breit sein.

In weiterer vorteilhafter Ausgestaltung des Butterschälers ist es vorgesehen, dass das Klingenelement und das Führungselement so angeordnet sind, dass beim Schälen des Butterstücks der flache Bereich des Klingenelements quer, insbesondere orthogonal zu der Flachseite des Klingenelements, zu der an dem Butterstück anliegenden Oberfläche des Führungselements, insbesondere des anliegenden Bereichs dessen Mantelfläche, beabstandet ist und/oder die Schnittkante und die Schwenkachse des Klingenelements so angeordnet sind, dass beim Schälen des Butterstücks der flache Bereich und/oder die Schnittkante des Klingenelements quer, insbesondere orthogonal zu der Flachseite des Klingenelements, zu Schwenkachse des Klingenelements beabstandet sind. Entsprechend dieser Beabstandung können das Klingenelement und das Führungselement an dem Griffelement angeordnet sein. Der Abstand quer, insbesondere orthogonal zur Butteroberfläche kann dabei auch als Höhenversatz bezeichnet werden. Eine an dem Butterstück zur Anlage vorgesehen bzw. daran anliegende Oberfläche kann auch als Auflagebereich bzw. Auflagefläche bezeichnet werden. Die Beabstandung ist bevorzugt zwischen 0,6mm und 1,5mm, besonders bevorzugt ca. 1mm.

In weiterer vorteilhafter Ausgestaltung des Butterschälers ist es vorgesehen, dass das Klingenelement und das Führungselement so angeordnet sind, dass beim Schälen des Butterstücks der flache Bereich des Klingenelements in einer durch diesen gebildeten Ebene zu der an dem Butterstück anliegenden Oberfläche des Führungselements, insbesondere des anliegenden Bereichs dessen Mantelfläche, beabstandet ist. Auch dies kann als Höhenversatz zwischen dem Klingenelement und dem Führungselement bezeichnet werden. Der Höhenversatz kann dabei maßgeblich für die Dicke der Butterscheibe sein. Bevorzugt kann der Butterschäler dazu ausgebildet sein, dass dieser Abstand einstellbar ist, um die Dicke der Butterscheibe einzustellen. Beispielsweise kann dafür ein Satz Rollen als Führungselemente mit jeweils unterschiedlichem Durchmesser bereitgestellt werden, sodass sich der Nutzer für eine Butterscheibendicke durch Auswahl der Rolle entscheiden kann. Alternativ kann die Position des Führungselements verstellt werden. Der Höhenversatz kann auch einer Richtung quer, insbesondere orthogonal zu einer Zugrichtung des Butterschälers beim Butterschälen entsprechen.

In weiterer vorteilhafter Ausgestaltung des Butterschälers ist es vorgesehen, dass der flache Bereich des Klingenelements einen vorderen, die Schnittkante aufweisenden breiten Bereich aufweist, welcher sich im Wesentlichen in Richtung entlang der Schnittkante wenigstens soweit wie die Schnittkante erstreckt und einen sich an den breiten Bereich an einem der Schnittkante abgewandten Ende anschließenden schmalen Bereich aufweist, welcher sich in der Richtung entlang der Schnittkante weniger weit erstreckt als der breite Bereich. Der Bereich, der die Schnittkante aufweist, erstreckt sich vorzugsweise also wenigstens so weit in der Breite wie die Schnittkante. Der schmale Bereich erstreckt sich beispielsweise lediglich bis zu 50% soweit in der Breite wie die Schnittkante und/oder der breite Bereich, bevorzugt bis zu 30%, besonders bevorzugt 20% oder weniger. Zwischen dem breiten Bereich und dem schmalen Bereich kann ein Übergangsbereich vorgesehen sein, in welche Breite abnimmt. Der Übergangsbereich kann auch zu schmalen Bereich gezählt werden. Alternativ kann als schmaler Bereich lediglich ein Bereich mit konstanter Breite angesehen werden. Der schmale Bereich kann in Richtung weg von der Schnittkante in der Richtung entlang der Schnittkante bei steigendem Abstand kürzer werden; also zulaufend ausgebildet sein. Der schmale Bereich kann dann auch als verjüngter Bereich und/oder verjüngter Endbereich bezeichnet werden. Die Richtung entlang der Schnittkante kann auch als Breite des Klingenelements bezeichnet werden, die Richtung quer, insbesondere orthogonal dazu als Länge. Eine Länge des schmalen Bereichs kann beispielsweise wenigstens dreimal so lang sein wie die des breiten Bereichs, bevorzugt wenigstens fünfmal so lang, ganz besonders bevorzugt ca. 6,5 mal so lang. Der breite Bereich kann sich orthogonal zur Schnittkante beispielsweise 3mm bis 6mm erstrecken, bevorzugt 4mm bis 5mm, ganz besonders bevorzugt 4,3mm. Die Erstreckung bzw. Länge des schmalen Bereichs in dieselbe Richtung kann beispielsweise 15mm bis 50mm sein, bevorzugt 20mm bis 40mm, ganz besonders bevorzugt ca. 28,7mm. Eine solche Erstreckung erlaubt eine besonders einfache Handhabung des Butterschälers, resultiert in einem leichten Butterschäler und erlaubt dennoch ein sauberes Abtrennen eines Butterspans. Alternativ kann sich der Butterschäler jedoch auch wesentlich länger in Zugrichtung erstrecken. Beispielsweise kann der flache Bereich, insbesondere der schmale Bereich, eine Längserstreckung wenigstens mit 80% der Länge des Butterstücks, bevorzugt wenigstens 100% der Länge des Butterstücks in der vorgesehenen Schälposition aufweisen. Gemäß der hier noch weiter beschriebenen Butterstückausrichtung für das Schälen bzw. bei Verwendung der hier noch weiter beschriebenen Butterdose bzw. des hier noch weiter beschriebenen Butterdosensystems kann die Längserstreckung zum Schälen üblicher deutscher Butterstücke beispielsweise wenigstens 80mm betragen, bevorzugt 100mm. Eine solche Erstreckung erlaubt einen besonders einfachen und sicheren Transport des abgeschälten Butterspans zu einem Gebäck und verhindert besonders sicher ein Wiederanhaften des abgeschälten Butterspans am restlichen Butterstück.

Die Breite bzw. die Richtung entlang der Schnittkante kann auch als quer, insbesondere orthogonal, zur Zugrichtung zum Butterschälen definiert sein. Der schmale Bereich ist besonders bevorzugt mittig des Klingenelements angeordnet, vorzugsweise in der Verlängerung einer Längsachse des Griffelements. Der schmale Bereich kann dazu dienen, die abgeschälte Butter zu Halten. Insbesondere kann so auch bei langen abgeschälten Butterspänen ein Wiederanhaften an der Butter vermieden werden, bevorzugt indem der Butterspan vollständig von dem Butterstück getrennt gehalten wird. Zudem kann der schmale Bereich auch beim Bewegen, Ablegen und/oder Andrücken des Butterspans an einem Gebäck wie einer Brotscheibe helfen.

Der schmale Bereich kann bevorzugt eine Breite in der gleichen Größenordnung wie die Länge des breiten Bereichs aufweisen. Beispielsweise kann eine Breite des schmalen Bereichs zwischen dem halbfachen und doppelten der Länge des breiten Bereichs sein. Zu dem breiten Bereich wird dabei bevorzugt eine Schlifffacette der Schnittkante dazugezählt. Der schmale Bereich und der breite Bereich können gemeinsam einen T-förmigen Flachen Bereich bilden. Der durch den schmalen Bereich gebildete Stamm der T-form kann dabei zulaufend ausgebildet sein und/oder ein Übergang zwischen dem Stamm und eines durch den breiten Bereich gebildeten Dachs der T-form kann einen Radius aufweisen.

Der schmale Bereich, welcher auch als Verlängerung bezeichnet werden kann, grenzt den Butterschäler dabei von einem Hartkäsehobel, wie beispielsweise in der NL 2007 808 gezeigt, ab. Ein solcher Hartkäsehobel hat einen langen von der Schnittkante abgewandten flachen Bereich, welcher sich jedoch eine im Wesentlichen durchgehende gleiche Breite aufweist bzw. nur geringfügig zuläuft. Dadurch kann zwar ein Hartkäse nach dem Abhobeln sicher aufgenommen werden. Beim Schälen von Butter ist dagegen die Reibung an der großen Fläche zu groß und die Butter bleibt kleben, wobei diese Problematik bei Hartkäse nicht vorhanden ist. Auch die feststehende Schnittkante ist bezüglich der Nutzung zum Butterschälen nachteilig. Ein solcher Käsehobel weist jedenfalls auch keinen T-förmigen flachen Bereich auf.

Der schmale Bereich und der breite Bereich sind bevorzugt einstückig ausgebildet, wodurch der Butterschäler robust und kostengünstig ist. Die beiden Bereiche können jedoch auch durch zwei separate Teile gebildet sein, womit das Klingenelement besonders gut an jeweilige regionale Buttergrößen angepasst werden kann und auch bei unterschiedlichen Größe viele Gleichteile verwendet werden können. Die beiden Teile sind dann bevorzugt dauerhaft miteinander verbunden.

Bevorzugt ist eine Auflagefläche des Führungselements wenigstens so groß wie der schmale Bereich des Klingenelements, der breite Bereich des Klingenelements und/oder der gesamte flache Bereich des Klingenelements. So wird eine große Auflagefläche bereitgestellt, was einem Versinken bzw. einem ungewollt tiefen Eindrücken des Führungselements in das Butterstück beim Schälen entgegenwirkt. Im Vergleich beispielsweise zu einem Gemüseschäler kann so auch weiche Butter noch zuverlässig geschält werden.

In weiterer vorteilhafter Ausgestaltung des Butterschälers ist es vorgesehen, dass der Butterschäler spülmaschinenfest und/oder korrosionsbeständig ausgebildet ist. Ein spülmaschinenfester Butterschäler ist besonders leicht zu reinigen. Ein korrosionsbeständiger Butterschäler ist besonders robust und langlebig.

In weiterer vorteilhafter Ausgestaltung des Butterschälers ist es vorgesehen, dass ein Schwenkbereich des Klingenelements durch jeweilige Anschläge an dem Griffelement begrenzt ist, insbesondere auf einen Schwenkbereich von 90°, bevorzugt 80°, ganz besonders bevorzugt ca. 73°. Dadurch ist zum einen ein einfaches Eintauchen des Butterschälers in das Butterstück möglich. Das Eintauchen des Butterschälers kann durch die Lagerung des Klingenelements zwischen Schnittkante und Rolle bzw. Führungselement begünstigt sein. Die Klinge wird so an bzw. in das Butterstück gepresst, wenn die Rolle an das Butterstück angedrückt wird. Durch die Anschläge wird das Ansetzen des Butterschälers erleichtert, da das Klingenelement durch die Anschläge in einer ansetzbaren Position gehalten wird. Dadurch muss dieses nicht vorher händisch durch Drehen korrekt ausgerichtet werden. Zum anderen kann so aber ein ungewolltes Umklappen und damit Bewegen des Butterspans in Richtung des Griffelements vermieden. Der Schwenkbereich ermöglicht zudem ein einfaches Abheben des Butterspans bzw. der Butterscheibe vom Butterstück an dessen Ende, wenn das Führungselement bereits von der Butter an deren Ende abgezogen wurde aber das Klingenelement noch in Kontakt mit dem Butterstück ist. Durch den Anpressdruck auf den Butterschäler in Richtung des Butterstücks wird so ein Schwenken des Klingenelements bewirkt, welches ein Abhebeln des Butterspans von dem Butterstück bewirkt oder zumindest unterstützt. Der Butterschäler ist so besonders komfortabel.

In weiterer vorteilhafter Ausgestaltung des Butterschälers ist es vorgesehen, dass ein erster Anschlag eine Rotation des Klingenelements in einer ersten Stellung begrenzt, in welcher der flache Bereich des Klingenelements im Wesentlichen parallel zu der Oberfläche des Butterstücks ausgerichtet ist, auf welcher das Führungselement beim Schälen des Butterstücks anliegt, und/oder parallel zu einer zum Aufliegen auf der Oberfläche des Butterstücks ausgebildeten Oberfläche des Führungselements ausgerichtet ist. Dadurch wird insbesondere ein Schälen des Butterstücks vereinfacht. Die durch den ersten Anschlag definierte Position bzw. erste Stellung kann auch als Schälposition bezeichnet werden. Der erste Anschlag kann einen von der Schnittkante bzw. dem flachen Bereich in Richtung der Zugrichtung beim Schälen vorstehenden Anschlagsbereich des Klingenelements umfassen, dieser ist bevorzugt seitlich zur Schnittkante angeordnet. Beispielsweise kann es sich dabei um den aufgebogenen Bereich des Klingenelements handeln, welcher in der ersten Stellung an einem Bereich des Griffelements anliegt.

In weiterer vorteilhafter Ausgestaltung des Butterschälers ist es vorgesehen, dass ein zweiter Anschlag eine Rotation des Klingenelements in einer zweiten Stellung begrenzt, in welcher der flache Bereich des Klingenelements im Wesentlichen quer zu der Oberfläche des Butterstücks ausgerichtet ist, auf welcher das Führungselement beim Schälen des Butterstücks anliegt, und/oder quer zu einer zum Aufliegen auf der Oberfläche des Butterstücks ausgebildeten Oberfläche des Führungselements ausgerichtet ist und/oder quer zu einer Längserstreckung des Griffelements. Die zweite Stellung kann auch als Butterabnahmestellung und/oder Eintauchstellung dienen bzw. bezeichnet werden. Durch diesen Winkel kann der Butterschäler zu Beginn des Schälvorgangs besonders einfach in das Butterstück eintauchen. Zudem kann so, wie oben beschrieben, der Butterspan am Ende des Butterstücks automatisch von dem Butterstück abgehebelt werden. Durch die Begrenzung der Schwenkbewegung bzw. durch den Anschlag kann ein Abwurf des Butterstücks oder ein Kontakt mit der Hand des Nutzers, welches das Griffelements hält, vermieden werden. Insbesondere kann die zweite Stellung einem Winkel von bis zu 90°, bevorzugt bis zu 80°, besonders bevorzugt ca. 73° zu einer zum Aufliegen auf der Oberfläche des Butterstücks ausgebildeten Oberfläche des Führungselements ausgerichtet sein und/oder quer zu einer Längserstreckung des Griffelements.

In weiterer vorteilhafter Ausgestaltung des Butterschälers ist es vorgesehen, dass das Klingenelement von der ersten Stellung in die zweite Stellung mit seinem flachen Bereich weg von einer Seite rotiert, an welcher der Butterschäler, insbesondere dessen Führungselement, an dem Butterstück zum Schälen anliegt. Der Butterschäler bzw. die Anschläge können also so ausgebildet sein, dass das Klingenelement auf kürzestem Weg zwischen der ersten Stellung und der zweiten Stellung rotiert. Dadurch können Stellungen, in welchem dem die Schnittkante nicht wenigstens näherungsweise in Zug- bzw. Schälrichtung weist, vermieden werden. Dadurch ist der Butterschäler ohne umständliches händisches Drehen des Klingenelements jederzeit einsatzbereit.

In weiterer vorteilhafter Ausgestaltung des Butterschälers ist es vorgesehen, dass das Führungselement einen in Richtung quer, insbesondere orthogonal, zur Zugrichtung beim Butterschälen mittigen Auflagebereich zum Anliegen auf dem Butterstück beim Schälen aufweist, und wenigstens einen seitlich davon angeordneten äußeren Abstützbereich aufweist, welcher von dem Auflagebereich vorsteht. Insbesondere kann das Führungselement zwei bezüglich des Auflagebereichs gegenüberliegende Abstützbereiche aufweisen. Die Abstützbereiche sind vorzugsweise nicht zur Auflage auf dem zu schälenden Butterstück ausgebildet. Beispielsweise sind die Abstützbereiche soweit außen angeordnet, dass ein mittig in dem Auflagebereich angeordnetes Butterstück nicht bis zu diesen reicht. Beispielsweise kann dafür der Auflagebereich ca. 40mm breit sein und die Abstützbereiche außenseitig dazu angeordnet sein, sodass bei einem standardisierten deutschen Butterstück geschält werden kann während die Abstützbereiche außenseitig des Butterstücks neben diesem kontaktfrei angeordnet sind. Der Auflagebereich ist also vorzugsweise wenigstens so breit wie das zu schälendes Butterstück und jeweilige Abstützbereiche liegen nicht an der Butter beim Schälen an. Die Abstützbereiche dienen dazu, einen Schnitt in eine Butterdose bei nahezu vollständig abgeschältem Butterstück zu vermeiden. Vorzugsweise stehen jeweilige Abstützbereiche so weit von dem Auflagebereich vor, wie in Schälposition der Höhenversatz zwischen Schnittkante und Auflagebereich des Führungselements ist. Die Abstützbereiche sind beispielsweise bei dem als Rolle ausgebildeten Führungselement in Achsrichtung außenseitig zur Mantelfläche angeordnete mantelförmige Abstützflächen (Vorsprünge neben der Mantelfläche für Anlage auf dem Butterstück), welche bevorzugt komplett umlaufend und orthogonal zur Mittelachse angeordnet sind. Bevorzugt entspricht eine Höhe der Vorsprünge mindestens dem Höhenversatz der Mantelfläche zu der Schnittkante, insbesondere in der ersten Stellung bzw. Schälposition.

In weiterer vorteilhafter Ausgestaltung des Butterschälers ist es vorgesehen, dass das Klingenelement zur Bildung der Schnittkante von der beim Butterschälen in Schnittrichtung weisenden Seite zur ihr gegenüberliegenden Seite zuläuft und/oder ausgehend von der beim Butterschälen in Schnittrichtung bzw. nach oben weisenden Seite des flachen Bereichs hin zur Schnittkante angeschliffen ist. Die in beim Schälen (je nach Anstellwinkel leicht) in Schnittrichtung weisende Seite des Klingenelements weist bei einem horizontal ausgerichteten Klingenelement, wenigstens teilweise, nach oben. Auch der sich daran anschließende, nicht zulaufende und/oder ungeschliffene Bereich des flachen Bereichs des Klingenelements weist vorzugsweise nach oben. Eine horizontale Ausrichtung kann durch die Längserstreckung des Griffelements und/oder den flachen Bereich des Klingenelements definiert sein. Dabei weist bevorzugt eine dem Butterstück beim Schälen zugewandte Seite nach unten und/oder bevorzugt eine dem Butterstück beim Schälen abgewandte Seite und/oder der unteren Seite gegenüberliegende Seite nach oben. Vorzugsweise ist die gegenüberliegende Seite des Klingenelements ungeschliffen und/oder eine gerade Verlängerung bzw. eben mit dem restlichen flachen Bereich ebener Bereich. Die Schnittkante kann durch eine Schlifffacette gebildet sein, welche also, in horizontaler Ausrichtung parallel zur Butteroberseite, oberseitig und/oder an der der Butter abgewandten Seite und/oder an der beim Butterschälen wenigstens leicht in Schälrichtung bzw. Zugrichtung weisenden Seite angeordnet ist. Eine Schlifffacette kann eine gegenüber dem flachen Bereich schräge Fläche sein und/oder ein Bereich, an welchem das Klingenelement spitz zuläuft. Im Bereich der Schlifffacette ist das Klingenelement bevorzugt dünner als im flachen Bereich, insbesondere kann sich eine Dicke in Richtung der Schnittkante verjüngen. Bevorzugt bildet die Schlifffacette einen Innenwinkel mit der benachbarten bzw. gegenüberliegenden Seite des Klingenelements zwischen 15° und 30°, bevorzugt ca. 20°. Dies hat zu besonders guten Schälergebnissen geführt. Ein zu spitzer Winkel resultiert dagegen in einer zu scharfen Schnittkante, welche sich schnell abnutzt. Ein zu stumpfer Winkel resultiert dagegen in einer zu stumpfen Schnittkante, welche hohe Zugkräfte beim Butterschälen erfordert und/oder nicht sauber schneidet. Bei sehr spitzem Winkel ist die geschliffene Fläche zudem länger bzw. größer als bei einem relativ stumpfen Winkel. Je länger die geschliffene Fläche ist, umso stärker haftet die Butter an, insbesondere bei einem ansonsten aufgerauten flachen Bereich. Bei kürzerer Fläche lässt sich der Butterspan leichter ablösen. Das Anhaften des Butterspans zumindest in einem kleinen Bereich wie bei der Schlifffacette kann zum Abnehmen des Butterstücks vorteilhaft sein. Das Anhaften sollte jedoch nicht zu stark sein, damit sich der Butterspan auch leicht ablösen lässt, beispielsweise zum Belegen eines Gebäcks. Gemäß dieser Anforderungen und Wirkungen ist der Winkelbereich von 15-20° besonders gut geeignet.

Die Geometrie der Schnittkante bzw. des Klingenelements kann auch analog zu einem Schneideinsatz von Fräsern, Bohrern und dergleichen beschrieben werden. Die Oberseite des Klingenelements ist dann die Spanfläche. Bei dem Butterschäler ist die Spanfläche bevorzugt durch die Schlifffacette gebildet, welcher sich an den flachen Bereich bzw. einen nicht geschliffenen flachen Bereich des Klingenelements anschließt. Die dem Butterstück beim Schälen zugewandte bzw. die unterseitige Fläche bildet dann die Freifläche. Bei dem Butterschäler ist die Freifläche bevorzugt durch eine ungeschliffene Fläche des flachen Bereichs bzw. die Seite des flachen Bereichs ohne Schlifffacette gebildet, welcher sich bevorzugt direkt an die Schnittkante des Klingenelements anschließt. Der oben beschriebene Innenwinkel der Schlifffacette bzw. der Schnittkante entspricht dann einem Keilwinkel. Der Winkel zwischen der Unterseite bzw. Freifläche und dem Butterstück entspricht dem Freiwinkel und kann im Wesentlichen dem Anstellwinkel entsprechen. Bevorzugt ist dieser Freiwinkel bei dem Butterschäler näherungsweise 0°, das heißt die Freifläche kann auf dem Butterstück aufliegen oder nahezu aufliegen. Der Freiwinkel kann dabei unabhängig von dem Keilwinkel sein.

Bei bekannten Gemüseschälern ist dagegen die Spanfläche durch einen durchgehend flachen Bereich und ungeschliffenen Bereich gebildet. Bei bekannten Gemüseschälern ist die Freifläche durch einen an die Schlifffacette anschließenden flachen Bereich gebildet. Bei bekannten Gemüseschälern liegt dagegen die Schlifffacette an, womit der Freiwinkel zu dem Keilwinkel korrespondiert.

Durch die oben genannte Anordnung von Schnittkante und/oder Schlifffacette kann ein vorteilhaftes Schnittverhalten erzielt werden. Insbesondere kann das Klingenelement zum Schälen mit einer durchgehenden flachen Seite und/oder einem Anstell- bzw. Freiwinkel der flachen Seite gegenüber der Schnittrichtung und/oder der Butterstückoberfläche von ca. bzw. beinahe 0° durch das Butterstück bzw. über das Butterstück gezogen werden. Die Schlifffacette bzw. der angeschliffene Vorderbereich des Klingenelements kann den Butterspan so zudem leicht anheben, wodurch ein Anhaften an einer Oberseite des flachen Bereichs, insbesondere im Bereich des breiten flachen Bereichs bzw. nahe der Schnittkante, reduziert sein kann. Zudem kann so der Abhebewinkel des Butterspans durch die Schlifffacette vorgegeben werden, wodurch ein Einrollen des Spans verhindert werden kann und ein im Wesentlichen flacher Butterspan abgeschält werden kann. Im Vergleich dazu ist eine Schlifffacette bei Gemüseschälern üblicherweise an einer dem Schnittgut zugewandten Seite bzw. Unterseite angeordnet. Dies ist fertigungsbedingt häufig sogar notwendig, da dort eine vor der Schnittkantenfläche ausgebildete Auflage, im Gegensatz zu hierin genannten Ausführungsformen des Führungselements bzw. der Rolle, meist einstückig mit dem Klingenelement bzw. der Schnittkante ausgebildet ist und so ein oberseitiges Schleifen behindert. Beim Gemüseschäler ist ein Aufrollen - im Gegensatz zum Butterschäler - zudem gewünscht, damit zu entsorgende Schalen herunterfallen. Eine solche, dem Butterstück beim Schälen zugewandte Schlifffacette kann jedoch unnötig hohe Schnittkräfte verursachen und/oder negative Auswirkungen auf die Spanbildung haben. Insbesondere kann so eine unkontrollierte Butterverdrängung in Richtung des Butterstück beim Schälen bewirkt werden, welche die Schnittkräfte erhöht und eine weniger saubere Abtrennung des Butterspans bewirkt. Zudem kann die Schlifffacette gemäß den bekannten Gemüseschälern als Auflagefläche fungieren, womit sich ein gegenüber dem Butterstück hoher Anstellwinkel der Schnittkante bzw. des flachen Bereichs ergeben würde. Auch dies kann bezüglich jeweiliger Schnittkräfte und/oder der Abschälung flacher Butterspäne nachteilig sein.

Ein zweiter Aspekt der Erfindung betrifft ein Butterdosensystem mit einer Butterdose, welche zur Aufnahme eines Butterstücks ausgebildet ist, insbesondere mit einem Butterschäler gemäß dem ersten Aspekt der Erfindung. Die sich aus dem Butterschäler gemäß dem ersten Erfindungsaspekt ergebenden Merkmale und Vorteile sind der Beschreibung des ersten Erfindungsaspekt zu entnehmen, wobei vorteilhafte Ausgestaltungen des ersten Erfindungsaspekts als bevorzugte vorteilhafte Ausgestaltungen des zweiten Erfindungsaspekts und umgekehrt anzusehen sind.

Eine Größe der Butterdose, insbesondere deren Butteraufnahmeraum, kann, genauso wie die des Klingenelements, gemäß landesspezifischer Normgröße von Butterstücken ausgebildet sein. Die Butterdose kann beispielsweise eine im Wesentlichen rechteckige Grundform mit umlaufenden alternierenden langen und kurzen Seitenflächen aufweisen. Auf einer Seite können jeweilige Seitenflächen in einer Ebene senkrecht zu den Seitenflächen enden, welche einen Boden der Butterdose bildet. Auf diesem Boden liegt das Butterstück bevorzugt in der Butterdose. Vorzugsweise liegt das Butterstück dabei mit der zweitschmalsten Seite auf, welche in eine Richtung eine kürzeste Erstreckung der Butter aufweist und in eine zweite Richtung eine längste Erstreckung. Dadurch können besonders lange aber schmale Butterscheiben abgeschält werden, auch wenn das Butterstück weiter auf diesem Boden liegt. Das Klingenelement und die Butterdose können für eine vorbestimmte Schällage des Butterstücks in ihren Abmessungen, insbesondere ihrer Breite, aufeinander abgestimmt sein. Insbesondere kann eine Breite des Führungselements des Butterschälers, insbesondere die Rolle und gegebenenfalls deren Abstützbereich, auf seitliche Wand des Schalenelements zur Butteraufnahme abgestimmt sein, vorzugsweise so dass diese auf der Seitenwand aufliegen und ein Schneiden in den Boden der Butterdose verhindert wird. Die kürzeste Seite des Butterstücks kann beispielsweise als Stirnseite des Butterstücks bezeichnet werden.

Die Butterdose kann beispielsweise ein Schalenelement zum Aufnehmen des Butterstücks aufweisen und wenigstens ein Deckelement zum Verschließen eines Aufnahmeraums und/oder Abdecken / Einschließen eines auf dem Schalenelement gelagerten Butterstücks. Das Deckelement kann für das Schälen der Butter abgenommen werden.

In weiterer vorteilhafter Ausgestaltung des Butterdosensystems ist es vorgesehen, dass die Butterdose ein Basis- bzw. Schalenelement zum Halten bzw. zur Aufnahme eines Butterstücks aufweist und einen Deckel, welche lösbar miteinander verbunden sind. Dadurch muss das Butterstück nicht zum Schälen entnommen werden und kann komfortabel aromasicher aufbewahrt werden.

In weiterer vorteilhafter Ausgestaltung des Butterdosensystems ist es vorgesehen, dass der Deckel ein erstes Deckelelement und ein zweites Deckelelement aufweisen, welche in einer geschlossenen Stellung lösbar miteinander verbunden sind, wobei das erste und das zweite Deckelelement zum Verstauen ineinander steckbar ausgebildet sind und/oder wobei der Deckel, insbesondere bei ineinander verstauten Deckelelementen, einen Ständer bildet, auf welchem das Schalenelement für das Schälen des Butterstücks aufsetzbar, vorzugsweise aufsteckbar ist. Durch das Verstauen ineinander kann der Deckel platzsparend bei Nichtnutzung aufbewahrt werden. Durch das Vorsehen eines Ständers kann das Butterschälen erleichtert werden. Insbesondere bei einem nur noch dünnen bzw. kleinen Restbutterstück kann der Ständer einen Abstand zu einer Aufstellfläche, wie einer Tischoberseite, bereitstellen. Dadurch ist weiterhin ein komfortables Schälen mit dem Butterschäler möglich, insbesondere ohne dass die das Griffelement haltende Hand an die Aufstellfläche stößt. Die Butterdose hat so in Verbindung mit dem Butterschäler einen zusätzlichen Komfortnutzen, der über das bloße Butteraufbewahren hinaus geht.

In weiterer vorteilhafter Ausgestaltung des Butterdosensystems ist es vorgesehen, dass der als Ständer angeordnete Deckel das Schalenelement schräg zu einer Auflagefläche, auf welcher der Ständer steht, hält. Die schräge Halterung kann ein Verrutschen der Butter beim Schälen verhindern. Zudem ist so das Butterstück für das Schälen mit dem Butterschäler ergonomischer gehalten.

In weiterer vorteilhafter Ausgestaltung des Butterdosensystems ist es vorgesehen, dass ein Winkel zwischen der Auflagefläche, auf welchem der Ständer steht, und einer Auflagefläche des Schalenelements, auf welcher das Butterstück aufnehmbar ist, 10° bis 25° beträgt, bevorzugt ca. 17°. Ein solcher Winkel bzw. Winkelbereich ist besonders ergonomisch, während die Butter dennoch sicher gehalten ist.

In weiterer vorteilhafter Ausgestaltung des Butterdosensystems ist es vorgesehen, dass wenigstens eines der beiden Deckelelemente einen außen umlaufenden, vorstehenden Kragen aufweist, welcher in der geschlossenen Stellung und/oder in der Verstaustellung an dem anderen der beiden Deckelelemente anliegt und/oder an welchem das Schalenelement anliegt, insbesondere bei dem als Ständer angeordneten Deckel. Dadurch wird eine Positionierung der jeweiligen Teile zueinander nach Art eines Anschlags bereitgestellt. Zudem kann der umlaufende Kragen bei der Abdichtung helfen. Insbesondere kann so eine Art Labyrinthdichtung in der geschlossenen Stellung bereitgestellt werden, welche ein besonders aromasicheres Aufbewahren der Butter ermöglicht.

In weiterer vorteilhafter Ausgestaltung des Butterdosensystems ist es vorgesehen, dass das erste Deckelelement mit dem zweiten Deckelelement und/oder eines der Deckelemente mit dem Schalenelement in jeweiligen Stellungen mittels eines Reibschlusses aneinander befestigt sind. Der Reibschluss kann auch als Klemmung ausgebildet sein. Durch den Reibschluss sind die Teile in den jeweiligen Stellungen sicher aneinander befestigt und dennoch einfach zu lösen. Vorzugsweise ist die Klemmung so stark ausgebildet, dass die Teile auch mit aufgenommen Butterstück noch aneinander beim Hochheben befestigt bleiben. Ganz besonders bevorzugt sind nur die beiden Deckelelement miteinander geklemmt bzw. reibschlüssig in der geschlossenen Stellung verbunden. Der Deckel bzw. das untere Deckelelement liegt dagegen bevorzugt nur auf dem Schalenelement bei geschlossenem Deckel auf. Dadurch kann der Deckel dann einfach von dem Schalenelement abgenommen werden, wenn Butter gewünscht ist.

In weiterer vorteilhafter Ausgestaltung des Butterdosensystems ist es vorgesehen, dass wenigstens eines der Deckelelemente einen im Wesentlichen umlaufenden Steg aufweist, insbesondere einen von dem Kragen abstehenden Steg, welcher eine Klemmverbindung für die Bereitstellung des Reibschlusses mit dem anderen Deckelelement und/oder dem Schalenelement bereitstellt. Vorzugsweise steht der Steg von dem Kragen ab. Auch der Steg kann einen Teil einer Labyrinthdichtung bilden. Der Steg kann je nach Stellung der Deckelelemente die jeweilige Klemmung bereitstellen. An dem Steg können jeweilige vorstehende Rippen angeordnet sein, um die Reibung bzw. Stärke der Verbindung einfach vorgeben zu können. Damit können andere Bereiche mit geringeren Fertigungstoleranzen gefertigt sein, ohne dass der Reibschluss beeinträchtigt wird. Dadurch können jeweilige Fertigungskosten besonders gering sein. Der Steg kann unterbrochen ausgebildet sein, um dessen Elastizität bzw. Verformbarkeit für die Presspassung bzw. Klemmung zu erhöhen. Der Steg kann also aus auch mehreren Stegteilen bestehen, welche voneinander beabstandet sind.

In weiterer vorteilhafter Ausgestaltung des Butterdosensystems ist es vorgesehen, dass das Schalenelement einen Boden aufweist, welche einen Aufnahmeraum zum Aufnehmen des Butterstücks nach unten begrenzt, sowie eine von dem Boden abstehende im Wesentlichen umlaufende Wand, welche den Aufnahmeraum seitlich begrenzt. Die umlaufende Wand kann einen Aufnahmeraum derart begrenzen, dass das Butterstück beim Schälen nicht verrutscht oder zumindest nicht aus dem Aufnahmebereich herausrutscht. Auch einem Umfallen der Butter kann die seitliche Wand entgegenwirken. Das Butterstück ist so besonders sicher aufgenommen. Der Boden kann einen Auflagebereich für das aufgenommene Butterstück bilden. Die Wand kann an den Boden anschließen und kann auch als seitliche Wand bezeichnet werden. Jeweilige Abmaße des Aufnahmeraums und der seitlichen Wand können gemäß landespezifischer Butterstückgröße ausgebildet sein. Butter in Deutschland hat beispielsweise an der schmalen Längsseite eine handelsübliche Breite von ca. 35mm und eine Länge von 100mm, wobei übliche Abweichungen bei 34 bis 38mm bzw. 96mm bis 104mm liegen. Diese Seite soll vorzugsweise auf dem Boden aufliegen.

In weiterer vorteilhafter Ausgestaltung des Butterdosensystems ist es vorgesehen, dass innenseitig an der Wand wenigstens ein Vorsprung, insbesondere in Form einer Rippe, vorgesehen ist, mittels welchem das in dem Aufnahmeraum angeordnete Butterstück geklemmt werden kann. Dieser Vorsprung dringt beispielsweise teilweise in die Butter ein und hält diese sicher in Position. Insbesondere eine schmale Rippe kann Butter gut festhalten. Der Vorsprung bietet einen Toleranzausgleich für Abweichungen in der Butterstückgröße. Beispielsweise kann der Vorsprung 1mm bis 5mm in den Aufnahmeraum von der seitlichen Wand hinein vorstehen, bevorzugt 3mm bis 4mm. Bevorzugt erstreckt sich der Vorsprung über nahezu die komplette Höhe der seitlichen Wand und schließt an den Boden an, um eine leichte Reinigung zu ermöglichen. Bevorzugt sind jeweilige Vorsprünge symmetrisch an gegenüberliegenden Teilbereichen der seitlichen Wand angeordnet. Die Höhe der seitlichen Wand kann beispielsweise 2mm bis 40mm betragen, bevorzugt 10mm bis 20mm, besonders bevorzugt ca. 15mm. Eine geringere Höhe resultiert in einer leichteren Butterdose während mit einer größeren Höhe das Butterstück besser abgestützt ist. Die Vorsprünge können eine entsprechende Hocherstreckung haben.

In weiterer vorteilhafter Ausgestaltung des Butterdosensystems ist es vorgesehen, dass die Wand vom Boden schräg absteht, insbesondere mit einem Winkel von ca. 93°, und/oder sich mit zunehmenden Abstand vom Boden verjüngt. Die 93° können einer Neigung der Wand von 3° nach außen von dem Aufnahmeraum weg entsprechen. Vorzugsweise ist die Wand aufgrund dieses Winkels so gestaltet, dass diese vom Boden weg schmaler wird. Der Winkel kann also ein innenseitiger Winkel der dem Aufnahmeraum zugewandten bzw. an den Boden angrenzende Oberfläche der seitlichen Wand sein. Ebenso kann eine dem Aufnahmeraum abgewandte bzw. zu der an dem Boden des Aufnahmeraums angrenzende Oberfläche abgewandte Oberfläche einen außenseitig gemessenen Winkel von 93° aufweisen. Dann verjüngt sich die seitliche Wand beidseitig nach oben hin. Eine solche Bauweise ist vorteilhaft bei der Fertigung als Spritzgussteil, insbesondere bei der Entformung. Zudem kann so eine Querschnittsfläche des Aufnahmeraums parallel zum Boden mit zunehmenden Abstand vom Boden zunehmen. Entsprechend wird ein Toleranzausgleich für Butterstücke mit fertigungsbedingt abweichenden Grundflächen zur Auflage in der Butterdose bereitgestellt. Ein Toleranzausgleich kann auch einfach dadurch zumindest teilweise erreicht werden, dass die Butter seitlich über die Innenkante der seitlichen Wand an deren Oberkante leicht hinaussteht und gegebenenfalls unterhalb gequetscht wurde. Zudem kann Butter Wasser verlieren und damit schrumpfen und/oder sich erwärmen und damit verformen. Durch die schräge seitliche Wand rutscht dann das Butterstück einfach weiter Richtung Boden in den Aufnahmeraum hinein und ist so weiter sicher gehalten. Alternativ kann die Butter bereits beim Einsetzen in den Aufnahmeraum bzw. Aufrüsten in das Butterdosensystem bis an den Boden gedrückt werden und ist dann sicher geklemmt, insbesondere mit den Rippen als zusätzliche Sicherheit.

In weiterer vorteilhafter Ausgestaltung des Butterdosensystems ist es vorgesehen, dass die Wand wenigstens einseitig unterbrochen ist. Dies erlaubt einfaches Aushebeln eines Rests des Butterstücks, welcher nicht mehr über Wand hinaussteht, beispielsweise mit einem Messer oder dem verjüngten Ende des Klingenelements. Diese Unterbrechung kann bevorzugt eine Erstreckung gemäß dem schmalen Bereich des Klingenelements und/oder einer gängigen Breite eines Tafelmessers aufweisen, das heißt so breit sein, dass zumindest der schmale Bereich und/oder ein gängiges Tafelmesser dort flach einführbar ist. Jeweilige ausgehebelte Butterreste können einfach auf ein neues Butterstück aufgelegt oder aufgedrückt werden, um dort wieder abgeschält zu werden. Ansonsten kann die ausgehebelte Butter auch anderweitig, beispielsweise beim Kochen verwendet werden. Die Restbutter kann also nicht erst bei einem Spülen der Butterdose entfernt werden. So geht keine Butter verloren.

Eine Höhe der Butterdose bzw. des Aufnahmeraums bei geschlossenem Deckel ist bevorzugt auch an landespezifische Buttergrößen angepasst. Beispielsweise ist gemäß der oben beschriebenen Auflage des Butterstücks ein deutsches Butterstück mit 250gr. Gewicht ca. 75mm hoch, wobei übliche Abweichungen bei 73 bis 78mm liegen. Damit auch entsprechend das Restbutterstück passt, sollte der Aufnahmeraum beispielsweise 80mm plus gegebenenfalls die Höhe der seitlichen Wand hoch sein.

In weiterer vorteilhafter Ausgestaltung des Butterdosensystems ist es vorgesehen, dass wenigstens eines der Teile der Butterdose, insbesondere jeweilige Deckelelemente und/oder das Schalenelement aus wenigstens einem Kunststoff gebildet sind und/oder die Butterdose spülmaschinenfest und/oder korrosionsbeständig ausgebildet ist. Dadurch können diese Teile leicht, robust und einfach zu reinigen sein. Bevorzugt können diese Teile auch aus einem oder mehreren Kunststoffen bestehen. Insbesondere kann es sich um kostengünstige Spritzgussteile handeln. Eine spülmaschinenfeste Butterdose ist besonders leicht zu reinigen. Eine korrosionsbeständige Butterdose ist besonders robust und langlebig.

In weiterer vorteilhafter Ausgestaltung des Butterdosensystems ist es vorgesehen, dass die Butterdose, insbesondere das Schalenelement, dazu ausgebildet ist, dass das Butterstück mit einer Schmalseite aufliegend aufgenommen wird. Dies ist vorteilhaft bezüglich der Abmaße von Butterscheiben, die abgeschält werden können. Insbesondere kann das Schalenelement bzw. die Butterdose dazu ausgebildet sein, das Butterstück auf der zweitkleinsten Seite liegend aufzunehmen. So können lange aber schmale Scheiben abgeschält werden, welche optimal zum Buttern einer Brotscheibe sind. Zudem kann so der Butterschäler besonders schmal und damit kompakt sein.

In weiterer vorteilhafter Ausgestaltung des Butterdosensystems ist es vorgesehen, dass die Butterdose, insbesondere das Schalenelement, dazu ausgebildet ist, das aufgenommene Butterstück im Wesentlichen luftdicht einzuschließen, insbesondere in der geschlossenen Stellung der Deckelelemente. Dies ist für den Aromaschutz der Butter vorteilhaft. Hierfür können an jeweiligen Kontaktflächen jeweiliger Teile Dichtungen und/oder Presspassungen vorgesehen sein.

In weiterer vorteilhafter Ausgestaltung des Butterdosensystems ist es vorgesehen, dass die Butterdose eine Halterung für den Butterschäler aufweist, insbesondere für ein bezüglich des Griffelements senkrechtes Halten des Butterschälers. Die Halterung ist vorzugsweise an einem der Deckelelemente ausgebildet. Durch die Halterung kann der Butterschäler gemeinsam mit der Butterdose gelagert werden, insbesondere im Kühlschrank. So ist der Butterschäler immer griffbereit bei Nutzung der in der Butterdose gelagerten Butter. Zudem kann der Butterschäler so nicht ohne Weiteres verlegt werden.

In weiterer vorteilhafter Ausgestaltung des Butterdosensystems ist es vorgesehen, dass die Butterdose, insbesondere eines der Deckelemente, eine außenseitige Aussparung zur Ablage des Klingenelements aufweist, insbesondere bei Halten des Butterschälers in der Halterung der Butterdose. Insbesondere kann die Aussparung außenseitig in geschlossener Stellung der Deckelelemente angeordnet sein, insbesondere auf einer Oberseite am Rand. Der Butterschäler bzw. das Klingenelement wird in der Aussparung bevorzugt mit einem der Schnittkante abgewandten Ende angeordnet, um Verschmutzungen zu vermeiden. Bevorzugt ist die Aussparung zur Aufnahme des schmalen Bereichs des Klingenelements ausgebildet. Mit der Aussparung kann ein ungewolltes Schwenken des Klingenelements bei Halten des Butterschälers an der Butterdose vermieden werden. Bevorzugt entspricht die Schwenkposition des Klingenelements bei der Aufnahme in der Aussparung der zweiten Stellung.

In weiterer vorteilhafter Ausgestaltung des Butterdosensystems ist es vorgesehen, dass die Butterdose an deren Unterseite, insbesondere an dem Schalenelement und/oder der Halterung des Butterschälers, ein Antirutschelement, insbesondere in Form eines Gummi- oder Silikonteils, aufweist. Die Unterseite kann die dem Aufnahmeraum für die Butter bzw. dem Boden des Schalenelements abgewandte Seite sein. Durch das Antirutschelement kann die in der Butterdose aufgenommene Butter ohne Verrutschen der Dose leicht geschält werden. Ein Gummiteil oder Silikonteil kann einfach gereinigt werden. Insbesondere kann es mit einer Presspassung befestigt sein und somit lösbar sein.

Weitere Vorteile, Merkmale und Einzelheiten der Erfindung ergeben sich aus der nachfolgenden Beschreibung eines bevorzugten Ausführungsbeispiels sowie anhand der Zeichnungen.
- Fig. 1: zeigt in einer schematischen Draufsicht einen erfindungsgemäßen Butterschäler,
- Fig. 2: zeigt in einer schematischen Perspektivansicht den Butterschäler gemäß Fig. 1.
- Fig. 3: zeigt ausschnittsweise den Butterschäler gemäß Fig. 1 in einer perspektivischen Unteransicht.
- Fig. 4: zeigt in einer schematischen Perspektivansicht ein erfindungsgemäßes Butterdosensystem mit dem Butterschäler gemäß Fig. 1.
- Fig. 5: zeigt in einer schematischen Seitenansicht das Butterdosensystem gemäß Fig. 4.
- Fig. 6: zeigt in einer schematischen Perspektivansicht das Butterdosensystem gemäß Fig. 4 in einer geöffneten bzw. Schälposition.
- Fig. 7: zeigt in einer schematischen Perspektivansicht das Butterdosensystem gemäß Fig. 4 mit jeweiligen Deckelelementen in Verstauposition und ohne ein Schalenelement.
- Fig. 8: zeigt in einer weiteren schematischen Perspektivansicht das Butterdosensystem in der Stellung gemäß Fig. 6 und mit entnommenen Butterschäler.

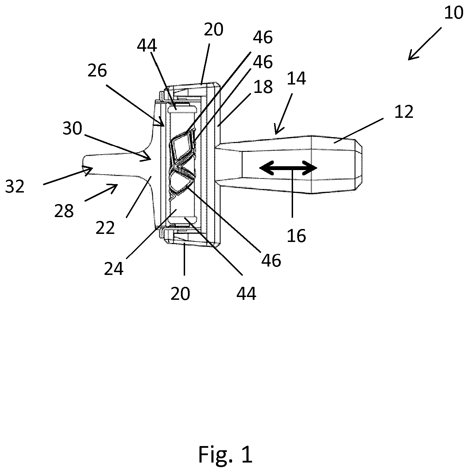

Fig. 1 zeigt in einer schematischen Draufsicht einen spülmaschinenfesten Butterschäler 10. Der Butterschäler 10 weist ein Griffelement 12 aus einem Kunststoff auf, dessen Haltebereich 14 zum Greifen durch eine menschliche Hand ausgebildet ist. Der Haltebereich 14 ist dabei im Wesentlichen stabförmig ausgebildet und definiert eine Längserstreckung 16 des Griffelements 12. Der Haltebereich 14 ist in seinem Umfang bevorzugt eckig gestaltet, wodurch der Butterschäler 10 gut in der Hand liegt und sich auch bei der Verwendung von glatten Materialien in der Hand nicht ungewollt verdreht.

An seinem vorderen Ende weist das Griffelement 12 einen Querbalken 18 auf, welcher in zwei gegenüberliegende Arme 20 übergeht. Das Griffelement 12 bildet so eine gabelförmige Struktur.

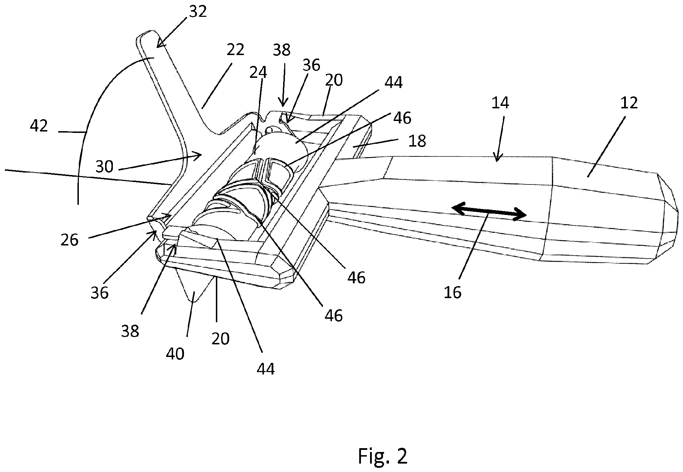

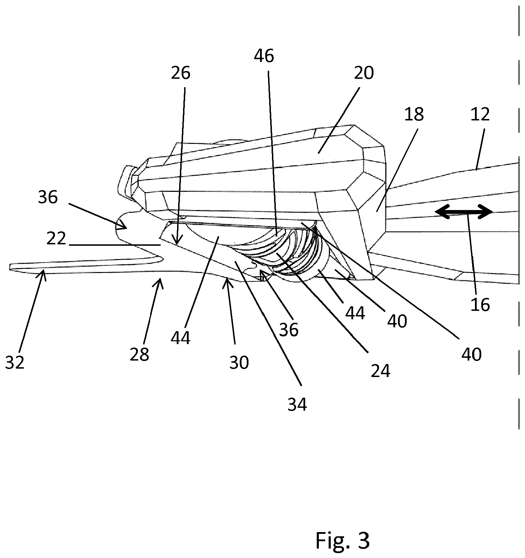

Zwischen den Armen 20 sind in einer Richtung orthogonal zur Längserstreckung 16 ein Klingenelement 22 und vorzugsweise auch ein Führungselement 24 gelagert. Das Klingenelement 22 ist dabei aus einem rostfreien Edelstahlblech geformt, welches beispielsweise 0,3mm bis 1,3mm dick sein kann, bevorzugt 0,6mm bis 0,8mm. An seiner dem Haltebereich 14 bzw. dem Führungselement 24 zugewandten Ende weist das Klingenelement 22 eine Schnittkante 26 auf, welche vorliegend als geschliffene Facette bzw. Klinge ausgebildet ist. Wie in Fig. 2 und Fig. 3 gut zu erkennen ist, ist das Klingenelement 22 zur Bildung der Schnittkante 26 lediglich an der beim Butterschälen bei geneigtem Klingenelement in Schäl-Richtung weisenden Seite (nach rechts in Fig. 2) bzw. bei Klingenelementstellung parallel zum Griff (Fig. 3) nach unten weisenden Seite (nach unten in Fig. 3) geschliffen und zulaufend. Die gegenüberliegende, beim Schälen gegen die Schnittrichtung (Fig. 2 nach links) bzw. nach oben (Fig. 3) weisende Seite ist dagegen bevorzugt eben ausgebildet. Das Klingenelement 22 ist schwenkbar an den beiden Armen 20 gelagert. Das Führungselement 24 ist vorliegend als Rolle ausgebildet und drehbar um seine Mittelachse an jeweiligen Verlängerungen 40 des Klingenelements gelagert. Alternativ könnte das Führungselement 24 auch unbeweglich an den Armen 20 oder den jeweiligen Verlängerungen 40 des Klingenelements gelagert sein, insbesondere bei einer Form als Gleitschuh. Ein solcher Gleitschuh könnte jedoch auch schwenkbar an dem Griffelement 12 gelagert sein. Das Führungselement 24 und das Klingenelement 22 sind voneinander beabstandet gelagert. Bevorzugt befindet sich ein Aufnahme- bzw. Drehpunkt der Rolle beim Abrollen an dem Butterstück zwischen der Schnittkante 26 und der Lagerung der Rollen, wodurch ein gewünschter Anpressdruck der Klinge während des Butterschälens bzw. Butterschneidens erreicht werden kann.

Der Butterschäler 10 kann mit dem Führungselement 24 auf ein Butterstück aufgelegt werden. Bei einem Ziehen mit der Schnittkante 26 in Zugrichtung weisend kann so, insbesondere bei einem geringen Anpressdruck auf das Butterstück, ein Butterspan bzw. eine Butterscheibe von dem Butterstück abgeschält werden. Das Funktionsprinzip beim Butterschälen kann dabei ähnlich zu einem Gemüseschäler bzw. Pendelschäler sein. Insbesondere kann das Klingenelement 24 einer Kontur der Butteroberfläche durch seine schwenkbare Lagerung gut folgen. Auch das initiale Eintauchen und ggf. ein Beenden des Schälens vor Erreichen des Endes des Butterstücks wird durch die schwenkbare Lagerung erleichtert.

Im Gegensatz zu Gemüse hat Butter beim Schälen jedoch besondere Anforderungen. Insbesondere hat Butter eine temperaturabhängige Konsistenz bzw. Härte und tendiert unter Einwirkung von Kraft anzuhaften und sich schmierend zu verformen. Im Gegensatz dazu ist Gemüse üblicherweise hart und gleitet auf glatten Flächen gut ab, insbesondere aufgrund seiner natürlichen Feuchtigkeit.

Zudem tendiert abgeschälte Butter dazu, sich wieder bei Berührung mit dem restlichen Butterstück mit diesem zu verbinden, so dass mit der abgeschälten Butter nicht mehr ohne Weiteres eine Brotscheibe belegt werden kann.

Beiden Eigenheiten von Butter wird der Butterschäler 10 durch seine besondere Bauweise gerecht. Das Klingenelement 22 weist einen im Wesentlichen flachen Bereich 28 hinter der Schnittkante 26 auf, welcher zum einen gut durch Butter gleitet und auf welchem sich zum anderen die abgeschälte Butter ablegen kann, ohne dass diese wieder an dem restlichen Butterstück anhaftet. Der flache Bereich 28 weist an seinen beiden Flachseiten, also seiner Oberseite und seiner Unterseite, eine aufgeraute Oberfläche auf, welche gegenüber einer glatten und/oder blanken Oberfläche, wie diese bei Edelstahlblechen üblich ist, ein Anhaften von Butter reduziert. Die aufgeraute Oberfläche kann beispielsweise durch eine mikroskopische Aufrauhung erzeugt werden, beispielsweise bei einer gestrahlten Oberfläche, oder auch durch eine geprägte oder mustergewalzte sichtbare Makrostruktur, beispielsweise ein Leinenmuster. Dem liegt die überraschende Erkenntnis zugrunde, dass eine rauere Oberfläche bei der schmierigen Konsistenz von Butter deren Anhaften reduziert. Im Gegensatz dazu ist beispielsweise beim Gemüseschälen mit einem höheren Anhaften zu rechnen, weshalb bei Gemüseschälern glatte Oberflächen bevorzugt sein können. Bei dem Butterschälen kann so die notwendige Schnittkraft und damit auch Zugkraft besonders gering sein. Zudem wird das Anhaften von abgeschälter Butter an dem flachen Bereich 28 vermieden oder zumindest verringert, sodass ein gleichmäßig dicker und glatter Butterspan abgeschält werden kann. Bei einer glatten Oberfläche könnte dieser dagegen gegebenenfalls partiell an dem flachen Bereich 28 anhaften und sich aufbauschen. In diesem Fall wäre dann erneut ein Verstreichen der abgeschälten Butter auf einer Brotscheibe oder einem Brötchen nötig, was unkomfortabel wäre. Zudem könnte sich der Butterschäler 10 so ggf. zusetzen, wodurch dieser vor einer weiteren Benutzung zunächst gereinigt werden müsste.

Um ein Wiederanhaften von abgeschälter Butter an dem restlichen Butterstück zu vermeiden, ist das Klingenelement 22 an dem von der Schnittkante 26 abgewandten Ende verlängert. Der flache Bereich 28 weist einen vorderen, breiten Bereich 30 auf, welcher sich unmittelbar an der Schnittkante 26 entlang erstreckt bzw. an welchem die Schnittkante 26 ausgebildet ist. Hier wird initial die Butter abgetrennt. An den breiten Bereich 30 schließt sich in Schnittrichtung abgewandter Richtung, welcher der Butterfließrichtung über das Klingenelement 22 entspricht, ein schmaler Bereich 32 an. Das Klingenelement 22 bzw. der flacher Bereich 28 verjüngen sich hier also in den schmalen Bereich 32, welcher sich nicht mehr über die gesamte Breite der Schnittkante 26 erstreckt. Der schmale Bereich 32 ist dabei breit genug, um das Wiederanhaften der abgeschälten Butter zu vermeiden. Zudem trägt diese Verlängerung den abgeschälten Butterspan auch beim Abheben von dem Butterstück, sodass dieser besonders lang sein kann und dennoch problemlos transportiert werden kann. Durch die Verjüngung des flachen Bereichs 28 ist eine Auflagefläche des abgeschälten Butterspans auf dem Butterschäler 10 insgesamt kleiner als bei einem gleich langen Bereich mit einer Breite der Schnittkante 26, wodurch das Risiko eines ungewollten Anhaftens an dem Klingenelement 22 reduziert ist. Aufgrund der kleineren Fläche sind zudem die Schnittkräfte beim Schälen geringer und der Butterschäler 10 ist leichter. Der schmale Bereich ist vorzugsweise mittig des Klingenelements angeordnet und weiter bevorzugt in der Verlängerung einer Längsachse des Griffelements und/oder parallel dazu.

Um den Butterschäler 10 über das Butterstück zu führen und eine gleichmäßige Schnitttiefe zu erzielen, ist das Führungselement 24 vorgesehen. Dieses rollt mit seiner Mantelfläche beim Schälen auf einer Oberfläche des zu schälenden Butterstücks ab und stützt so den Butterschäler 10 während gleichzeitig ein zu tiefes Eintauchen in die Butter verhindert wird. Insbesondere kann ein Abstand zwischen der Mantelfläche und der Schnittkante in Richtung orthogonal zur Oberfläche des Butterstücks die Dicke der abgeschälten Butterscheibe vorgeben. Dies ist in Fig. 3 durch Pfeil 34 veranschaulicht und kann auch als Höhenversatz bezeichnet werden. Durch Wechsel der Rolle bzw. des Führungselement 24 kann dabei vom Benutzer die Scheibendicke variiert werden.

Das Führungselement 24 weist auf seiner Mantelfläche jeweilige Erhebungen bzw. Vorsprünge 46 auf. Diese Erhebungen erhöhen die Wahrscheinlichkeit eines gleichmäßigen Abrollens der Rolle an der Butter beim Schälvorgang. Bei der Rolle ist dies vorteilhaft, da so auch bei weicher Butter weiter ein Abrollen gewährleistet wird. Ansonsten könnte sich die Rolle ggf. bei weicher bzw. warmer Butter nicht mehr drehen und stattdessen Butter vor sich herschieben. Dies könnte zu einem Zusetzen des Butterschälers 10 führen und/oder zu einer ungleichmäßigen Schnitttiefe. Die Erhebungen 46, alternativ oder zusätzlich auch Vertiefungen auf der Mantelfläche der Rolle, können beim Abrollen der Rolle auf dem Butterstück zudem ein Muster, Wörter und/oder ein Logo in den abgeschälten Butterspan einprägen. So können auch Botschaften und/oder Muster in den Butterspan, beispielsweise zu Werbezwecken, zur Verschönerung, und/oder zur Erheiterung, eingeprägt werden. Das Führungselement 24 kann einen austauschbaren Mantel aufweisen, sodass das eingeprägte Muster geändert werden kann. Alternativ kann hierfür auch die ganze Rolle getauscht werden. Vorzugsweise ist das Führungselement 24 aus Kunststoff gebildet, optional mit einem Gummi- oder Silikonmantel.

Bei einem Gleitschuh oder feststehende Rolle kann der Butterschäler 10 Butter auch nach ca. 1,5 Stunden nach Entnahme aus dem Kühlschrank und 20°C Zimmertemperatur zuverlässig schälen. Hinter einem feststehenden Gleitschuh kann sich jedoch Butter sammeln. Eine Rolle kann dagegen aufgenommene Butter einfach bei der nächsten Umdrehung wieder abstreifen. Bei zu warmer Butter kann eine Rolle verkleben, was jedoch bei einer durchschnittlichen Frühstückszeit von ca. 15min. bis 30min. nicht auftritt. Zudem ist bei Erhöhungen und Vertiefungen der Rolle ein hoher Entformungswinkel von 45° möglich, wodurch bei kalter Butter durch schwaches oder festes Andrücken die Dicke des abgeschälten Butterstücks über eine große Bandbreite und/oder sehr präzise vorgegeben werden kann. Vorzugsweise ist der Butterschäler 10 so ausgebildet, dass das Führungselement 24 getauscht werden kann, insbesondere eine drehende gegen eine feststehende Rolle.

Der Abstand zwischen Rolle und Schnittkante 26 erlaubt bei geringem Abstand ein einfaches Ansetzen der Klinge. Ein großer Abstand reduziert das Risiko des Verklebens der Klinge. Ein Eindrehen des geschnitten Butterspans durch die Rolle kann so vermieden werden. Bei großem Abstand folgt das Klingenelement 22 weniger konturgetreu der Oberfläche der Butter, wodurch Hügel und andere Unregelmäßigkeiten leicht entfernt werden können. Wenn der Butterschäler 10 bzw. dessen Schnittkante 26 vor der Kante des Butterstücks angesetzt wird, dann kann die Rolle aufliegen und die Schnittkante 26 kann durch das Andrücken nach unten gedrückt werden. Je höher dann der Abstand zwischen der Rolle und der Schnittkante 26 ist, desto dicker kann ein kurzer Butterspan am Anfang des Schnitts sein. Wird der Butterschäler 10 bzw. die Schnittkante 26 dagegen auf einer Oberseite des Butterstücks angesetzt, ermöglicht ein größerer Abstand ein leichteres Eintauchen der Klinge. Der Abstand kann auch durch die Lagerposition der Rolle an dem Klingenelement 22 vorgegeben werden. Die Drehachse der Rolle bleibt so auch bei unterschiedlichen Durchmessern der Rolle gleich. Unterschiedliche Durchmesser der Rolle beeinflussen insbesondere die Dicke jeweiliger abgeschälter Butterspäne, insbesondere durch unterschiedlichen Höhenversatz zwischen Auflagefläche und Schnittkante 26. Standardmäßig ergibt eine Rolle mit einem Durchmesser von 9,6 mm (gemessen ohne Vorsprünge; d.h. mit idealisierter Zylinderform) ein vorteilhaftes Schälverhalten.

Das Klingenelement 22 weist zwei seitlich zu der Schnittkante 26 aufgebogene Bereiche 36 auf, welche besonders gut in Fig. 3 zu erkennen sind. Die aufgebogenen Bereiche 36 bilden jeweils Durchgangslöcher, mit welchen das Klingenelement an den zwei Armen 20 des Griffelements mit darin angeordneten Zapfen gelagert sind. Die Lagerung an den Armen 20 ist dabei von der Schnittkante 26 in Zugrichtung und in Hochrichtung beabstandet, damit die Schnittkante 26 relativ zur Lagerachse verschwenkt wird. Dies erleichtert das Eintauchen des Klingenelements 22 zu Beginn des Schälvorgangs. Die gebogenen Bereiche 36 bilden auch einen Anschlag 38, welcher die Schwenkbewegung des Klingenelements 22 auf die in Fig. 2 gezeigte Stellung durch Anliegen an jeweiligen korrespondierenden Vorsprüngen der Arme 20 des Griffelements 12 beschränkt. In dieser Stellung kann ein auf dem flachen Bereich 28 befindliches Butterstück an Gebäck abgelegt und/oder abgestriffen werden, ohne dass sich das Klingenelement 22 ungewollt verschwenkt. Gerade durch die aufgeraute Oberfläche haftet der Butterspan bevorzugt nicht an, sodass es, beispielsweise durch eine Kippbewegung, einfach abgelegt werden kann und sich ansonsten von selbst von dem Klingenelement 22 löst. In die entgegengesetzte Richtung begrenzt eine vordere, vor der Schnittkante 26 angeordnete Verlängerung 40 die Schwenkbewegung des Klingenelements 22 ebenfalls durch Anliegen an dem Querbalken 18. Durch diesen Anschlag kann der Butterspan zudem einfach am Gebäck abgestriffen werden, falls sich dieser Ausnahmsweise nicht von selbst von der aufgerauten Oberfläche löst. Mittels der Verlängerung 40 kann das Klingenelement 26 auch bezüglich seiner Schwenkachse balanciert ausgebildet werden, sodass das Klingenelement nicht selbsttätig in eine bestimmte Stellung verschwenkt und/oder leichter verschwenkbar ist.

Eine hochgeklappte Stellung, in Fig. 2 gezeigt und durch Anschlag 38 begrenzt, weist dabei einen Winkel von 73° gegenüber der Längserstreckung 16 des Griffelements 16 bzw. der in Fig. 3 gezeigten Stellung auf, was in Fig. 2 durch Pfeil 42 veranschaulicht ist. Fig. 3 zeigt dagegen eine Schälposition, bei welcher sich der flache Bereich 28 im Wesentlichen parallel zu der Längserstreckung 16 des Griffelements 16 erstreckt. In einer solchen Position, oder in einer leicht abgewinkelten Position zur vergrößerten Beabstandung der das Griffelement 12 haltenden Hand von dem Butterstück, kann die Butter besonders einfach mit geringer Kraft und gleichmäßig geschält werden. Am Ende des Butterstücks liegt das Führungselement 24 jedoch nicht mehr auf der Butter auf, das Klingenelement 22 jedoch schon. Dabei wird der Benutzer üblicherweise dennoch eine Kraft bzw. einen Druck in Richtung auf die Butteroberfläche ausüben. Dadurch wird vorliegend ein Hochklappen des Klingenelements 22 in Richtung der in Fig. 2 gezeigten Stellung bewirkt. Dadurch wird ein auf dem flachen Bereich 28 aufliegender Butterspan von dem Restbutterstück abgehoben, wodurch der Butterschäler 10 besonders komfortabel zu nutzen ist. Um jedoch ein Umklappen auf die Hand des Benutzers und/oder ein Abwerfen des Butterspans zu verhindern, wird diese Schwenkbewegung durch den Anschlag 38 limitiert, wie in Fig. 2 gezeigt. Ein Winkel von maximal 73° ist dabei besonders vorteilhaft.

Der flache Bereich 28 ist vorliegend vollständig eben ausgebildet, was insbesondere in Fig. 3 gut zu erkennen ist. Dadurch ist die benötigte Schnittkraft besonders klein und die Fertigungskosten für den Butterschäler 10 sind gering. Der flache Bereich 28 könnte jedoch auch nach oben von dem Butterstück beim Schneiden weg gekrümmt oder abgewinkelt sein. Insbesondere der schmale Bereich könnte gegenüber dem breiten Bereich 30 gekrümmt oder abgewinkelt sein. Dadurch könnte der abgeschälte Butterspan besser abgehoben werden und/oder - je nach Krümmung oder Winkel - auch beim Schälen ein sich einrollender Span erzeugt werden.

Das Führungselement 24 weist in Breitenrichtung außen, also an seinen äußersten, den Armen 20 zugewandten Enden entlang der Erstreckung der Schnittkante 26, jeweils einen Vorsprung 44 auf. Bei der gezeigten Rolle sind diese umlaufend ausgebildet. Diese Vorsprünge 44 sind nicht zur Auflage auf dem zu schälenden Butterstück gedacht. Stattdessen ist das Führungselement 24 so breit ausgebildet, dass die Vorsprünge 44 seitlich beabstandet zu dem zu schälenden Butterstück angeordnet werden können. Dafür sind die entsprechenden Standardbreiten landesspezifischer Butterstücke zu beachten. Die Vorsprünge 44 sollen also kein Muster in das Butterstück beim Schälen einprägen. Stattdessen dienen die Vorsprünge 44 dazu, ein Schneiden in einen Boden eines Butterhalters mit der Schnittkante 26 zu vermeiden. Entsprechend sind die Vorsprünge vorzugsweise mindestens so hoch ausgebildet, wie der durch Pfeil 34 in Fig. 3 veranschaulichte maximale Höhenversatz zwischen der Schnittkante 36 und der restlichen Mantelfläche der Rolle, mit der das Führungselement auf dem Butterstück aufliegt. Dabei ist zu beachten, dass sich die Vorsprünge 36 üblicherweise in die Butter beim Schälen eindrücken und entsprechend nicht den Höhenversatz definieren. Stattdessen kann dieser über einen idealen Zylinder der Rolle definiert sein.

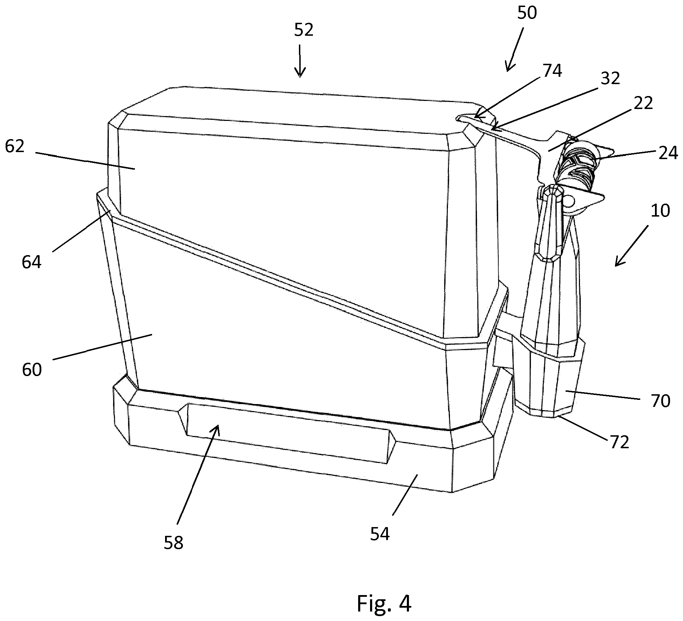

Fig. 4 zeigt in einer schematischen Perspektivansicht ein Butterdosensystem 50, zu welchem auch der Butterschäler 10 gehört. Weiterhin umfasst das Butterdosensystem 50 eine Butterdose 52, welche aus Kunststoffspritzgussteilen gebildet ist und eine rechteckige Grundform aufweist. Zudem sind jeweilige Kanten eckig und eine Oberseite flach, was eine platzsparende Lagerung im Kühlschrank und ein Stapeln anderer Gegenstände auf der Butterdose 50 erlaubt. Auch die hohe und schmale Form bzw. die besondere Ablageausrichtung des Butterstücks in dem Butterdosensystem, wie diese noch eingängig beschrieben wird, ermöglichen eine platzsparende Lagerung. In Fig. 4 ist die Butterdose 50 im geschlossenen Zustand gezeigt, in welchem ein Butterstück in einem Aufnahmeraum im Wesentlichen luftdicht eingeschlossen werden kann.

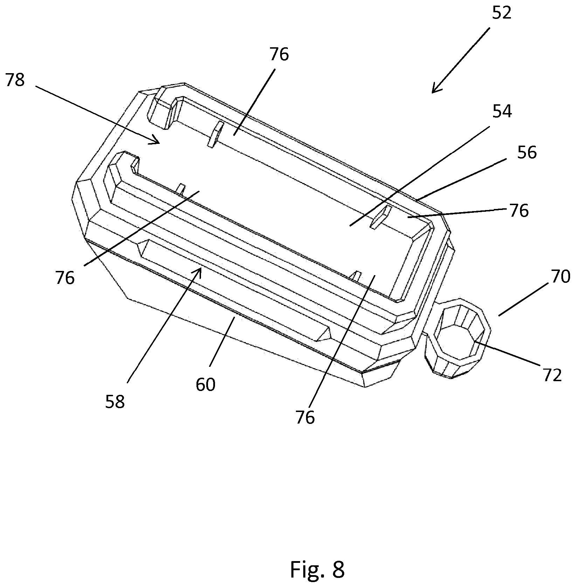

Die Butterdose 52 weist ein Schalenelement 54 auf, welches besonders gut in Fig. 8 zu erkennen ist. In dem Schalenelement 54 kann auf dessen Boden obenauf ein Butterstück gelagert werden. Das Schalenelement 54 weist dabei eine im Wesentlichen umlaufende und ca. 15mm hohe seitliche Wand 56 auf, welche den Aufnahmeraum für das Butterstück seitlich begrenzt. Der Aufnahmeraum bzw. die seitliche Wand 56 ist dabei so dimensioniert, dass ein deutsches Butterstück auf seiner langen Schmalseite stehend darin aufgenommen werden kann. Dies erlaubt es, viele lange und schmale Butterspäne abzuschälen. Weiterhin weist das Schalenelement 54 seitliche äußere Einkerbungen 58 auf, welche in Fig. 4 sehr gut zu erkennen sind. Dort kann das Schalenelement 54 zum Abziehen des Deckels der Butterdose 52 gut gehalten werden. Alternativ oder zusätzlich kann die Einkerbung 58 dazu dienen, ein Logo und/oder eine Beschriftung geschützt vor Beschädigungen anordnen zu können. In diesem Fall kann beispielsweise auch nur eine seitliche Einkerbung 58 vorgesehen sein.

Der Deckel der Butterdose weist zwei Deckelelemente auf, ein unteres Deckelelement 60 und ein oberes Deckelement 62. Im geschlossenen Zustand ruht das untere Deckelement 60 auf dem Schalenelement 54 und das obere Deckelelement 62 auf dem unteren Deckelelement 60. Das untere Deckelelement 60 wird dabei mittels der seitlichen Wand 56 auf dem Schalenelement in Position gehalten. Das untere Deckelelement 60 liegt dabei auf einem Kragen des Schalenelements 54 auf. Zusammen mit der seitlichen Wand 56 wird hier auch eine Art Labyrinthdichtung gebildet, welche eine besonders aromasichere Butteraufbewahrung ermöglicht. Die jeweiligen Teile können zusammengesteckt sein und mittels einer Presspassung gehalten sein. So kann die Butterdose 52 mit darin aufbewahrter Butter am Deckel hochgehoben werden, ohne dass sich die Butterdose 52 öffnet. Vorzugsweise ist das untere Deckelelement 60 jedoch nur lose auf dem Schalenelement 54 aufgesetzt, damit die Butter besonders schnell und einfach zugänglich ist. Die seitliche Wand 56 hilft hierbei dennoch, eine weitestgehend aromasichere Aufbewahrung der Butter zu ermögliche.

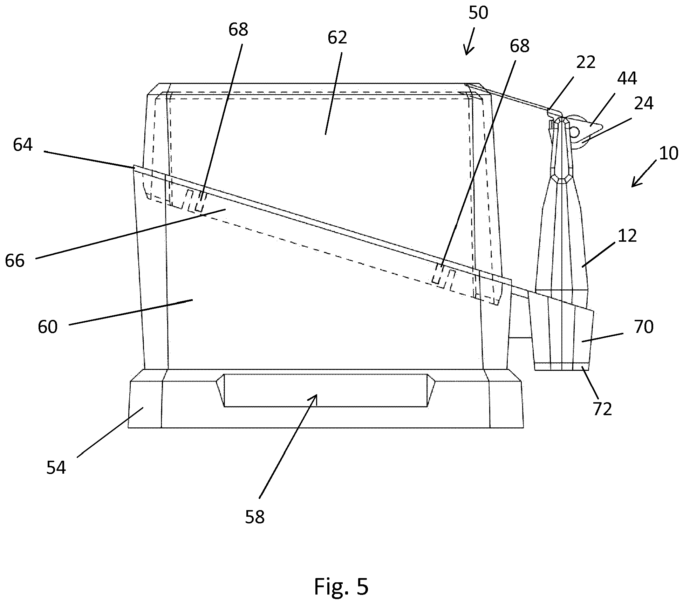

Fig. 5 veranschaulicht in einer Seitenansicht gestrichelt die Bauweise des oberen Deckelelements 62 und dessen Befestigung an dem unteren Deckelelement 60 in der geschlossenen Stellung. Das obere Deckelelement 62 weist einen Kragen 64 auf, welcher auf einem oberen Rand des unteren Deckelelements 60 aufliegt. Von dem Kragen 64 steht ein Steg 66 ca. 8mm ab, der in das untere Deckelelement 60 vorsteht. Dieser Steg 66 weist mehrere Unterbrechungen auf, um besser elastisch für eine Presspassung bzw. Klemmung elastisch verformbar zu sein. Alternativ oder zusätzlich können diese Unterbrechungen auch zur Aufnahme des Schalenelements 54 in der Schälposition dienen. Insbesondere können dort jeweilige Vorsprünge an einer Unterseite des Schalenelements 54 eingreifen, damit das Schalenelement 54 auf den Deckelelementen 60, 62 während des Schälens nicht ungewollt verrutschen kann. Zudem sind an dem Steg 66 jeweilige vorstehende Rippen 68 angeordnet. Mittels dieser Rippen 68 wird die Pressung vorgegeben, sodass der restliche Steg 66 mit größerer Toleranz gefertigt werden kann. Der Steg 66 und der Kragen 64 bilden eine Art Labyrinthdichtung, sodass die Butter in der Butterdose 52 besonders aromasicher aufbewahrt werden kann.

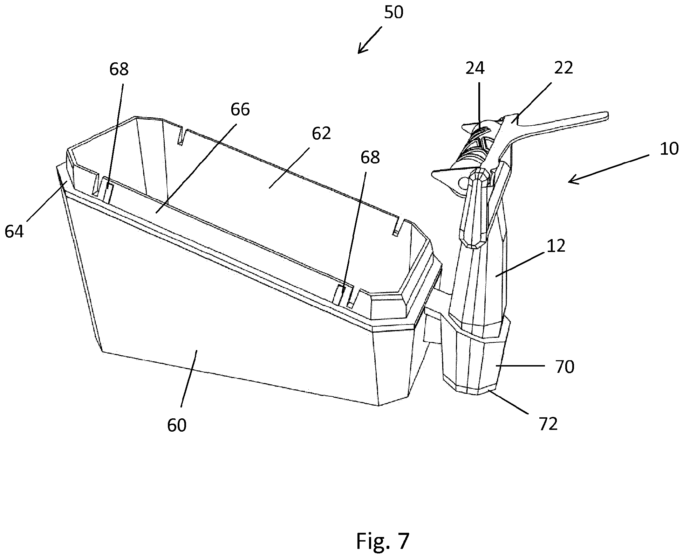

Die Wand des oberen Deckelements 62 ist leicht zulaufend. Das obere Deckelelement 62 ist dazu ausgebildet umgedreht in das untere Deckelelement 60 in einer Verstaustellung eingesteckt zu werden, was in Fig. 7 veranschaulicht ist. Dabei liegt das obere Deckelelement 62 erneut mit dem Kragen 64 auf dem unteren Deckelelement 60 auf, wobei nun der Steg 66 davon nach oben absteht. Der Deckel bildet so in der Verstaustellung eine Art Ständer, dessen Oberseite eine schiefe Ebene zu dessen Unterseite bildet, vorliegend mit einem Winkel von ca. 17°. Entsprechend ist eine Trennebene der Deckelelemente 60, 62 gegenüber einem Boden des Schalenelements 54 in der geschlossenen Stellung geneigt. Die beiden Deckelelemente 60, 62 bleiben so auch beim Butterschälen zusammen, sodass diese nicht versehentlich verlegt werden können.

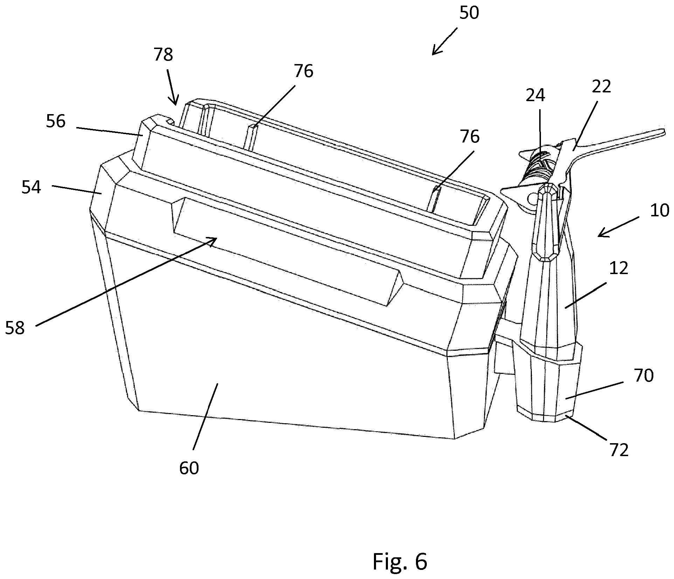

Auf das obere Deckelelement 62 kann das Schalenelement 54 mit einer korrespondierenden Ausnehmung auf den Steg 66 aufgesteckt werden und dort ebenfalls mittels einer Pressung gehalten werden. Alternativ oder zusätzlich kann das Schalenelement 54 auch nur lose aufgesetzt sein und dann beispielsweise mittels jeweiliger Rippen an den Unterbrechungen des Stegs 66 in Position gehalten werden. Bei einer solchen Bauweise kann die Konfiguration des Butterdosensystems 50 besonders schnell und einfach geändert werden. Diese auch als Schälposition der Butterdose 50 bezeichenbare Konfiguration ist beispielsweise in Fig. 6 veranschaulicht. So ist das darauf gehaltene Butterstück beispielsweise von einer Tischfläche beabstandet, was das Butterschälen erleichtert. Zudem ist das Butterstück so geneigt gehalten, was ebenfalls ergonomischer ist und zudem beim Schälen ein ungewolltes Butterrutschen reduzieren kann.

Die Butterdose 52 weist zudem eine Halterung 70 seitlich außen für den Butterschäler 10 auf. Diese Halterung 70 weist eine Öffnung auf, welche zu einem Endbereich des Griffelements 12 korrespondiert. So kann der Butterschäler dort aufrecht eingesteckt gehalten werden, wie in den Fig. 4 bis 7 gezeigt. Fig. 8 zeigt die Halterung 70 ohne Butterschäler 10. Erkennbar ist die korrespondierend eckige Form der Halterung 70, welche ein Verdrehen des Butterschälers 10 in der Halterung verhindert. Durch die Anordnung der Halterung 70 an dem unteren Deckelelement 60 kann diese auch in der Verstaustellung der beiden Deckelelemente 60, 62 genutzt werden. Dadurch kann der Butterschäler 10 sauber und sicher zwischen Schälvorgängen aufbewahrt werden.

Unterseitig an der Halterung 70 ist ein Antirutschelement 72 in Form eines Gummistöpsels eingelassen, welcher die Öffnung der Halterung 70 unterseitig verschließt. Wie in Fig. 7 gut zu erkennen ist, liegt dieses Antirutschelement 72 auf einer Abstellfläche, wie beispielsweise einer Tischfläche, auf. Dadurch kann ein Verrutschen der Butterdose 52 in Ständerkonfiguration beim Butterschälen verhindert oder zumindest reduziert werden. Dadurch kann auch einhändig ohne ein Festhalten der Butterdose 50 Butter geschält werden.

Das obere Deckelelement 62 weist an seiner Oberseite eine Aussparung 74 auf, in welcher der schmale Bereich des Klingenelements 22 wenigstens teilweise bei dem in der Halterung 70 gehaltenen Butterschäler 10 aufgenommen ist. Dadurch ist das Klingenelement 22 in einer bestimmten Schwenkposition gehalten, sodass ein ungewolltes Verschwenken vermieden werden kann. Dadurch wird verhindert, dass Butterrest an dem Klingenelement 22 ungewollt mit anderen Lebensmitteln und/oder dem Benutzer in Kontakt kommen.

In Fig. 6 und 8 sind weitere Details der Gestaltung der seitlichen Wand 56 des Schalenelements 54 zu erkennen. Innenseitig dem Aufnahmeraum für die Butter zugewandt weist die seitliche Wand 56 Rippen 76 auf. Diese können in ein dort aufgenommenes Butterstück wenigstens teilweise eindringen, um dieses besonders sicher zu halten. So kann ein Butterverrutschen beim Schälen reduziert oder verhindert werden. Die Rippen 76 bewirken bevorzugt eine Haltekraft, welche größer als jeweilige Schnittkräfte an der Butter sind und stehen beispielsweise 1mm bis 2mm von der seitlichen Wand 56 vor. Zudem können die Rippen 76 fertigungsbedingte Butterabmessungsabweichungen ausgleichen. Zudem ist die seitliche Wand 56 leicht in Richtung des Bodens des Schalenelements 54 zulaufend ausgebildet, beispielsweise mit einem Winkel von 3°. Das heißt, der Aufnahmeraum ist unten schmaler als oben. Bei einem Schrumpfen eines Butterstücks, beispielsweise aufgrund von Wasserverlust, rutscht die Butter so einfach weiter nach unten und ist damit weiter sicher gehalten. Alternativ kann die Butter auch initial bis auf den Boden des Schalenelements 54 gedrückt werden. Die Rippen 76 geben dann auch bei einem Schrumpfen des Butterstücks den notwendigen Halt zum Schälen. Die Butterdose 50 bzw. das Schalenelement 54 können somit auch produktionstechnische Abweichungen, insbesondere beim Verpacken von Butter, kompensieren.

Seitlich an einer Schmalseite weist die seitliche Wand 54 eine Aussparung 78 auf. Durch diese Aussparung 78 kann ein nicht mehr abschälbarer Rest des Butterstücks aus dem Aufnahmeraum entfernt werden. Beispielsweise kann dazu der schmale Bereich 32 des Klingenelements 22 flach eingeführt werden, um damit die Restbutter aus dem Schalenelement 54 zu hebeln. Alternativ kann hierzu auch ein Tafelmesser genutzt werden, welches insbesondere bereits weichere Butter aufgrund seiner größeren Länge einfach aus dem Schalenelement 54 hebeln kann.

### Bezugszeichenliste

- 10: Butterschäler
- 12: Griffelement
- 14: Haltebereich
- 16: Längserstreckung
- 18: Querbalken
- 20: Arme
- 22: Klingenelement
- 24: Führungselement
- 26: Schnittkante
- 28: flacher Bereich
- 30: breiter Bereich
- 32: schmaler Bereich
- 34: Pfeil
- 36: aufgebogener Bereich
- 38: Anschlag
- 40: Verlängerung
- 42: Pfeil
- 44: Vorsprung
- 46: Vorsprung
- 50: Butterdosensystem
- 52: Butterdose
- 54: Schalenelement
- 56: seitliche Wand
- 58: Einkerbungen
- 60: unteres Deckelement
- 62: oberes Deckelelement
- 64: Kragen
- 66: Steg
- 68: Rippen
- 70: Halterung
- 72: Antirutschelement
- 74: Aussparung
- 76: Rippen
- 78: Aussparung

## Patentansprüche

1. Butterschäler (10) mit einem Griffelement (12) und einem an dem Griffelement (12) schwenkbar gelagerten Klingenelement (22), welches wenigstens eine Schnittkante (26) an einem im Wesentlichen flachen Bereich (28) aufweist, sowie mit wenigstens einem an dem Klingenelement (22) gelagerten Führungselement (24),
wobei das Führungselement (24) zu der Schnittkante (26) des Klingenelements (22) beabstandet ist,
wobei der Butterschäler (10) dazu ausgebildet ist, mit dem Führungselement (24) auf einem Butterstück anliegend und mit der Schnittkante (26) in Zugrichtung weisend über das Butterstück gezogen zu werden und dabei mit dem Klingenelement (22) in das Butterstück einzutauchen, um so eine Butterscheibe von dem Butterstück abzuschälen, und wobei der flache Bereich (28) des Klingenelements (22) einen vorderen, die Schnittkante (26) aufweisenden breiten Bereich (30) aufweist, welcher sich im Wesentlichen in Richtung entlang der Schnittkante (26) wenigstens so weit wie die Schnittkante (26) erstreckt und einen sich an den breiten Bereich (30) an einem der Schnittkante (26) abgewandten Ende anschließenden schmalen Bereich (32) aufweist, welcher sich in der Richtung entlang der Schnittkante (26) weniger weit erstreckt als der breite Bereich (30).

2. Butterschäler nach Anspruch 1,
wobei wenigstens eine Flachseite, bevorzugt beide Flachseiten, des Klingenelements (22) eine aufgeraute Oberfläche aufweist, welche insbesondere gegenüber einer glatten und/oder blanken, insbesondere blankpolierten Oberfläche ein Anhaften von Butter reduziert.

3. Butterschäler (10) nach Anspruch 2, wobei
das Klingenelement (22) aus einem metallischen Werkstoff gebildet ist, insbesondere aus Stahl, und/oder die Oberfläche wenigstens einer der Flachseiten des Klingenelements (22) im Wesentlichen frei von metallisch blanken und/oder spiegelnden Bereichen ist.

4. Butterschäler (10) nach Anspruch 2 oder 3, wobei
eine Oberflächenrauhigkeit der aufgerauten Oberfläche des Klingenelements (22) einen Rauhigkeitswert Rₐ von 0,8 oder mehr hat, bevorzugt wenigstens 0,5, besonders bevorzugt wenigstens 0,8.

5. Butterschäler (10) nach einem der Ansprüche 2 bis 4, wobei
die aufgeraute Oberfläche des Klingenelements (22) durch eine strukturierte Oberfläche mit jeweiligen Vorsprüngen und/oder Vertiefungen gebildet ist.

6. Butterschäler (10) nach einem der vorhergehenden Ansprüche, wobei
das Führungselement (24) als Rolle ausgebildet ist, welche um deren Mittelachse drehbar an dem Klingenelement (22) gelagert ist und dazu ausgebildet ist, bei dem Schälen des Butterstücks mit einer Mantelfläche der Rolle auf dem Butterstück anzuliegen,
wobei bevorzugt die Mittelachse im Wesentlichen parallel zu der Schnittkante (26) des Klingenelements (22) ist.

7. Butterschäler (10) nach Anspruch 6, wobei
die Mantelfläche der Rolle jeweilige Vorsprünge (46) und/oder Vertiefungen aufweist, mittels welchen ein Muster in die Butterscheibe bei deren Abschälen von dem Butterstück einprägbar ist.

8. Butterschäler (10) nach einem der vorhergehenden Ansprüche, wobei
das Klingenelement (22) und das Führungselement (24) so angeordnet sind, dass beim Schälen des Butterstücks der flache Bereich (28) des Klingenelements (22) quer, insbesondere orthogonal zu der Flachseite des Klingenelements (22), zu der an dem Butterstück anliegenden Oberfläche des Führungselements (24), insbesondere des anliegenden Bereichs dessen Mantelfläche, beabstandet ist
und/oder
die Schnittkante (26) und die Schwenkachse des Klingenelements (22) so angeordnet sind, dass beim Schälen des Butterstücks der flache Bereich (28) und/oder die Schnittkante (26) des Klingenelements (22) quer, insbesondere orthogonal zu der Flachseite des Klingenelements (22), zu der Schwenkachse des Klingenelements (22) beabstandet sind.

9. Butterschäler (10) nach einem der vorhergehenden Ansprüche, wobei ein Schwenkbereich des Klingenelements (22) durch jeweilige Anschläge (38, 40) an dem Griffelement (12) begrenzt ist, insbesondere auf einen Schwenkbereich von 90°, bevorzugt 80°, ganz besonders bevorzugt ca. 73°,
wobei bevorzugt ein erster Anschlag (38) eine Rotation des Klingenelements (22) in einer ersten Stellung begrenzt, in welcher der flache Bereich (28) des Klingenelements (22) im Wesentlichen parallel zu der Oberfläche des Butterstücks ausgerichtet ist, auf welcher das Führungselement (24) beim Schälen des Butterstücks anliegt, und/oder parallel zu einer zum Aufliegen auf der Oberfläche des Butterstücks ausgebildeten Oberfläche des Führungselements (24) ausgerichtet ist und/oder parallel zu einer Längserstreckung (26) des Griffelements (12)
und/oder
wobei bevorzugt ein zweiter Anschlag (40) eine Rotation des Klingenelements (22) in einer zweiten Stellung begrenzt, in welcher der flache Bereich (28) des Klingenelements (22) im Wesentlichen quer zu der Oberfläche des Butterstücks ausgerichtet ist, auf welcher das Führungselement (24) beim Schälen des Butterstücks anliegt, und/oder quer zu einer zum Aufliegen auf der Oberfläche des Butterstücks ausgebildeten Oberfläche des Führungselements (24) ausgerichtet ist und/oder quer zu einer Längserstreckung (26) des Griffelements (12).

10. Butterschäler (10) nach einem der vorhergehenden Ansprüche, wobei
das Führungselement (24) einen in Richtung quer, insbesondere orthogonal, zur Zugrichtung beim Butterschälen mittigen Auflagebereich zum Anliegen auf dem Butterstück beim Schälen aufweist, und wenigstens einen seitlich davon angeordneten äußeren Abstützbereich (44) aufweist, welcher von dem Auflagebereich vorsteht.

11. Butterdosensystem (50) mit einer Butterdose (52), welche zur Aufnahme eines Butterstücks ausgebildet ist, und mit einem Butterschäler (10) nach einem der vorhergehenden Ansprüche.

12. Butterdosensystem (50) nach Anspruch 11, wobei
die Butterdose (52) ein Basis- bzw. Schalenelement (54) zum Halten bzw. zur Aufnahme eines Butterstücks aufweist und einen Deckel (60, 62), welche lösbar miteinander verbunden sind
und wobei
der Deckel ein erstes Deckelelement (60) und ein zweites Deckelelement (62) aufweisen, welche in einer geschlossenen Stellung lösbar miteinander verbunden sind,
wobei das erste und das zweite Deckelelement (60, 62) zum Verstauen ineinander steckbar ausgebildet sind
und/oder
wobei der Deckel, insbesondere bei ineinander verstauten Deckelelementen (60, 62), einen Ständer bildet, auf welchem das Schalenelement (54) für das Schälen des Butterstücks aufsetzbar, vorzugsweise aufsteckbar ist
und/oder
wobei die Butterdose (52), insbesondere das Schalenelement (54), dazu ausgebildet ist, dass das Butterstück mit einer Schmalseite aufliegend aufgenommen wird.

13. Butterdosensystem (50) nach Anspruch 12, wobei
der als Ständer angeordnete Deckel das Schalenelement (54) schräg zu einer Auflagefläche, auf welcher der Ständer steht, hält,
wobei bevorzugt ein Winkel zwischen der Auflagefläche, auf welchem der Ständer steht, und einer Auflagefläche des Schalenelements (54), auf welcher das Butterstück aufnehmbar ist, 10° bis 25° beträgt, bevorzugt ca. 17.

14. Butterdosensystem (50) nach einem der Ansprüche 12 oder 13, wobei
das Schalenelement (54) einen Boden aufweist, welche einen Aufnahmeraum zum Aufnehmen des Butterstücks nach unten begrenzt, sowie eine von dem Boden abstehende im Wesentlichen umlaufende Wand (56), welche den Aufnahmeraum seitlich begrenzt, wobei bevorzugt innenseitig an der Wand (56) wenigstens ein Vorsprung (76), insbesondere in Form einer Rippe (76), vorgesehen ist, mittels welchem das in dem Aufnahmeraum angeordnete Butterstück geklemmt werden kann
und/oder
wobei bevorzugt die Wand (54) vom Boden schräg absteht, insbesondere mit einem Winkel von ca. 93°, und/oder sich mit zunehmenden Abstand vom Boden verjüngt
und/oder
wobei bevorzugt
die Wand (54) wenigstens einseitig unterbrochen (78) ist.

15. Butterdosensystem (50) nach einem der Ansprüche 12 bis 14, wobei
die Butterdose (52) eine Halterung (70) für den Butterschäler (10) aufweist, insbesondere für ein bezüglich des Griffelements (12) senkrechtes Halten des Butterschälers (10),
wobei bevorzugt die Butterdose (52), insbesondere eines der Deckelemente (60, 62), eine außenseitige Aussparung (74) zur Ablage des Klingenelements (22) aufweist, insbesondere bei Halten des Butterschälers (10) in der Halterung (70) der Butterdose (52).

## Claims

1. A butter peeler (10) with a handle member (12) and a blade member (22) being pivotably mounted on the handle member (12), the blade member (22) comprising at least one cutting edge (26) at a substantially flat region (28), and with at least one guide element (24) mounted on the blade member (22),
wherein the guide element (24) is distanced from the cutting edge (26) of the blade member (22),
wherein the butter peeler (10) is configured to be pulled with the guide element (24) resting on a piece of butter and with the cutting edge (26) pointing in the pulling direction over the piece of butter and thus plunging with the blade element (22) into the piece of butter in order to peel a slice of butter from the piece of butter,
and wherein the flat region (28) of the blade member (22) has a wide front region (30) comprising the cutting edge (26), said wide region (30) extending substantially in the direction along the cutting edge (26) at least as far as the cutting edge (26) and comprising a narrow region (32) which adjoins the wide region (30) at an end facing away from the cutting edge (26) and which extends less far in the direction along the cutting edge (26) than the wide region (30).

2. The butter peeler according to claim 1,
wherein at least one flat side, preferably both flat sides, of the blade member (22) comprises a roughened surface which reduces the adhesion of butter particularly compared to a smooth and/or bright, in particular brightly polished surface.

3. The butter peeler (10) according to claim 2, wherein
the blade member (22) is formed from a metallic material, in particular from steel, and/or the surface of at least one of the flat sides of the blade member (22) is substantially free from metallic bright and/or reflective areas.

4. The butter peeler (10) according to claim 2 or 3, wherein
a surface roughness of the roughened surface of the blade member (22) has a roughness value Rₐ of 0.8 or more, preferably of at least 0.5, particularly preferably of at least 0.8.

5. The butter peeler (10) according to any one of claims 2 to 4, wherein
the roughened surface of the blade member (22) is formed by a structured surface with respective projections and/or recesses.

6. The butter peeler (10) according to any one of the preceding claims, wherein
the guide element (24) is configured as a roller which is mounted on the blade member (22) so as to be rotatable about its central axis and which is configured to rest on the piece of butter with a lateral area of the roller during peeling of the piece of butter, wherein preferably the central axis is substantially parallel to the cutting edge (26) of the blade member (22).

7. The butter peeler (10) according to claim 6, wherein
the lateral area of the roller comprises respective projections (46) and/or recesses by means of which a pattern can be stamped into the slice of butter when it is peeled off from the piece of butter.

8. The butter peeler (10) according to any one of the preceding claims, wherein
the blade member (22) and the guide element (24) are arranged such that, when peeling the piece of butter, the flat region (28) of the blade element (22) is spaced transversely, in particular orthogonally to the flat side of the blade element (22), from the surface of the guide element (24), in particular the adjacent region of its lateral area, which is in contact with the piece of butter
and/or
the cutting edge (26) and the swivel axis of the blade member (22) are arranged such that, when peeling the piece of butter, the flat region (28) and/or the cutting edge (26) of the blade member (22) are spaced transversely, in particular orthogonally to the flat side of the blade member (22), from the swivel axis of the blade member (22).

9. The butter peeler (10) according to any one of the preceding claims, wherein
a swivel range of the blade member (22) is limited by respective stops (38, 40) at the handle member (12), particularly to a swivel range of 90°, preferably 80°, particularly preferably approx. 73°,
wherein preferably a first stop (38) limits rotation of the blade member (22) in a first position in which the flat region (28) of the blade member (22) is aligned substantially parallel to the surface of the piece of butter which the guide element (24) abuts during peeling of the piece of butter, and/or aligned parallel to a surface of the guide element (24) configured to rest on the surface of the piece of butter and/or parallel to a longitudinal extension (26) of the handle member (12)
and/or
wherein preferably a second stop (40) limits rotation of the blade member (22) in a second position in which the flat region (28) of the blade member (22) is aligned substantially transversely to the surface of the piece of butter which the guide element (24) abuts during peeling of the piece of butter, and/or is aligned transversely to a surface of the guide element (24) configured to rest on the surface of the piece of butter and/or transversely to a longitudinal extension (26) of the handle member (12).

10. The butter peeler (10) according to any one of the preceding claims, wherein
the guide element (24) comprises a central support region in the direction transverse, in particular orthogonal, to the pulling direction during peeling of the butter for abutting the piece of butter during peeling and comprises at least one outer support region (44) which is arranged laterally thereof and projects from the support region.

11. A butter dish system (50) with a butter dish (52) configured for receiving the piece of butter, and with a butter peeler (10) according to any one of the preceding claims.

12. The butter dish system (50) according to claim 11, wherein
the butter dish (52) comprises a base or dish element (54) for respectively supporting or receiving a piece of butter and a lid (60, 62) which are releasably connected with each other
and wherein
the lid comprises a first lid member (60) and a second lid member (62) which are releasably connected with each other in a closed position,
wherein the first and second lid members (60, 62) are configured to be inserted into one another for stowage
and/or
wherein the lid, in particular in the case of lid members (60, 62) inserted into one another, forms a stand which the dish element (54) is attachable to, preferably pluggable onto, for peeling the piece of butter
and/or
wherein the butter dish (52), particularly the dish element (54), is configured to receive the piece of butter with one narrow side resting on it.

13. The butter dish system (50) according to claim 12, wherein
the lid arranged as a stand supports the dish element (54) at an angle to a support surface on which the stand stands,
wherein preferably an angle between the support surface on which the stand stands and a support surface of the dish element (54) on which the piece of butter is receivable is 10° to 25°, preferably approx. 17°.

14. The butter dish system (50) according to any one of claims 12 or 13, wherein
the dish element (54) comprises a base which delimits a receiving space for receiving the piece of butter to the bottom, and a substantially circumferential wall (56) which projects from the base and laterally delimits the receiving space,
wherein preferably at least one projection (76), in particular in the form of a rib (76), is provided on the inside of the wall (56), by means of which projection (76) the piece of butter arranged in the receiving space can be clamped
and/or
wherein preferably the wall (56) protrudes inclinedly from the floor, in particular at an angle of approx. 93°, and/or tapers with increasing distance from the base and/or
wherein preferably
the wall (56) is interrupted (78) on at least one side.

15. The butter dish system (50) according to any one of claims 12 to 13, wherein
the butter dish (52) comprises a holder (70) for the butter peeler (10), in particular for supporting the butter peeler (10) vertically with respect to the handle element (12), wherein preferably the butter dish (52), in particular one of the lid members (60, 62), comprises an external recess (74) for supporting the blade member (22), in particular when the butter peeler (10) is supported in the holder (70) of the butter dish (52).

## Revendications

1. Éplucheur à beurre (10) avec un élément de poignée (12) et un élément de lame (22) monté en pivotement contre l'élément de poignée (12), lequel élément de lame présente au niveau d'une zone essentiellement plate (28) au moins une arête de coupe (26), ainsi qu'avec au moins un élément de guidage (24) monté contre l'élément de lame (22),
dans lequel l'élément de guidage (24) est espacé par rapport à l'arête de coupe (26) de l'élément de lame (22),
dans lequel l'éplucheur à beurre (10) est conçu de façon à être tiré par-dessus la motte de beurre avec l'élément de guidage (24) appliqué sur une motte de beurre et avec l'arête de coupe (26) pointant dans la direction de traction et ce faisant de façon à plonger dans la motte de beurre avec l'élément de lame (22) pour ainsi détacher une tranche de beurre depuis la motte de beurre, et dans lequel la zone plate (28) de l'élément de lame (22) présente une zone large (30) avant présentant l'arête de coupe (26), laquelle zone large s'étend essentiellement dans la direction le long de l'arête de coupe (26) au moins aussi loin que l'arête de coupe (26) et présente une zone étroite (32) se raccordant à la zone large (30) au niveau d'une extrémité opposée à l'arête de coupe (26), laquelle zone étroite s'étend dans la direction le long de l'arête de coupe (26) moins loin que la zone large (30).

2. Éplucheur à beurre selon la revendication 1,
dans lequel au moins un côté plat, de préférence les deux côtés plats, de l'élément de lame (22) présente une surface rendue rugueuse, laquelle réduit une adhérence du beurre en particulier par rapport à une surface lisse et/ou satinée, en particulier polie jusqu'à être satinée.

3. Éplucheur à beurre (10) selon la revendication 2, dans lequel l'élément de lame (22) est formé dans un matériau métallique, en particulier en acier, et/ou la surface d'au moins l'un des côtés plats de l'élément de lame (22) est essentiellement exempte de zones métalliquement satinées et/ou spéculaires.

4. Éplucheur à beurre (10) selon la revendication 2 ou 3, dans lequel
une rugosité de surface de la surface rendue rugueuse de l'élément de lame (22) a une valeur de rugosité Rₐ de 0,8 ou plus, de préférence d'au moins 0,5, particulièrement de préférence d'au moins 0,8.

5. Éplucheur à beurre (10) selon l'une des revendications 2 à 4, dans lequel
la surface rendue rugueuse de l'élément de lame (22) est formée par une surface structurée avec des saillies et/ou des renfoncements respectifs.

6. Éplucheur à beurre (10) selon l'une des revendications précédentes, dans lequel
l'élément de guidage (24) est conçu en tant que roulette, laquelle est montée contre l'élément de lame (22) en rotation autour de l'axe central de celle-ci et conçue pour s'appliquer sur la motte de beurre lors de l'épluchage de la motte de beurre avec une surface d'enveloppe de la roulette,
dans lequel l'axe central est de préférence essentiellement parallèle à l'arête de coupe (26) de l'élément de lame (22).

7. Éplucheur à beurre (10) selon la revendication 6, dans lequel la surface d'enveloppe de la roulette présente des saillies (46) et/ou des renfoncements respectifs, au moyen desquels un motif peut être gaufré dans la tranche de beurre lors du détachement de celle-ci de la motte de beurre.

8. Éplucheur à beurre (10) selon l'une des revendications précédentes, dans lequel
l'élément de lame (22) et l'élément de guidage (24) sont agencés de sorte que, lors de l'épluchage de la motte de beurre, la zone plate (28) de l'élément de lame (22) soit espacée transversalement, en particulier de manière orthogonale par rapport au côté plat de l'élément de lame (22), par rapport à la surface, adjacente à la motte de beurre, de l'élément de guidage (24), en particulier de la surface d'enveloppe de la zone adjacente
et/ou
l'arête de coupe (26) et l'axe de pivotement de l'élément de lame (22) sont agencés de sorte que, lors de l'épluchage de la motte de beurre, la zone plate (28) et/ou l'arête de coupe (26) de l'élément de lame (22) soient espacées transversalement, en particulier de manière orthogonale par rapport au côté plat de l'élément de lame (22), par rapport à l'axe de pivotement de l'élément de lame (22).

9. Éplucheur à beurre (10) selon l'une des revendications précédentes, dans lequel
une zone de pivotement de l'élément de lame (22) est délimitée par des butées (38, 40) respectives contre l'élément de poignée (12), en particulier sur une zone de pivotement de 90°, de préférence 80°, complètement de préférence environ 73°,
dans lequel de préférence une première butée (38) délimite une rotation de l'élément de lame (22) dans une première position dans laquelle la zone plate (28) de l'élément de lame (22) est essentiellement orientée en parallèle de la surface de la motte de beurre, sur laquelle surface s'applique l'élément de guidage (24) lors de l'épluchage de la motte de beurre, et/ou orientée en parallèle d'une surface de l'élément de guidage (24) conçue pour une application sur la surface de la motte de beurre et/ou parallèle à une extension longitudinale (26) de l'élément de poignée (12)
et/ou
dans lequel de préférence une deuxième butée (40) délimite une rotation de l'élément de lame (22) dans une deuxième position dans laquelle la zone plate (28) de l'élément de lame (22) est essentiellement orientée transversalement à la surface de la motte de beurre, sur laquelle surface s'applique l'élément de guidage (24) lors de l'épluchage de la motte de beurre, et/ou transversalement à une surface de l'élément de guidage (24) conçue pour une application sur la surface de la motte de beurre et/ou transversalement à une extension longitudinale (26) de l'élément de poignée (12).

10. Éplucheur à beurre (10) selon l'une des revendications précédentes, dans lequel
l'élément de guidage (24) présente une zone de support centrale dans une direction transversale, en particulier orthogonale, à la direction de traction lors de l'épluchage de la motte de beurre pour une application sur la motte de beurre lors de l'épluchage, et au moins une zone d'appui (44) extérieure agencée latéralement à celle-ci, laquelle fait saillie depuis la zone de support.

11. Système de beurrier (50) avec un beurrier (52), lequel est conçu pour la réception d'une motte de beurre, et avec un éplucheur à beurre (10) selon l'une des revendications précédentes.

12. Système de beurrier (50) selon la revendication 11, dans lequel
le beurrier (52) présente un élément de base ou de coque (54), pour le maintien ou pour la réception d'une motte de beurre, et un couvercle (60, 62), lesquels sont reliés ensemble de façon amovible
et dans lequel
le couvercle présente un premier élément de couvercle (60) un deuxième élément de couvercle (62), lesquels sont reliés ensemble de façon amovible dans une position fermée,
dans lequel le premier et le deuxième élément de couvercle (60, 62) sont conçus pour pouvoir être emboîtés l'un dans l'autre pour le rangement
et/ou
dans lequel le couvercle, en particulier dans le cas d'éléments de couvercle (60, 62) rangés l'un dans l'autre, forme un présentoir sur lequel l'élément de coque (54) peut être posé, de préférence enfiché, pour l'épluchage de la motte de beurre
et/ou
dans lequel le beurrier (52), en particulier l'élément de coque (54), est conçu pour que la motte de beurre soit reçue appliquée avec un côté étroit.

13. Système de beurrier (50) selon la revendication 12, dans lequel
le couvercle agencé en tant que présentoir maintient l'élément de coque (54) à l'oblique par rapport à une surface de support sur laquelle se trouve le présentoir,
dans lequel de préférence un angle entre la surface de support, sur laquelle se trouve le présentoir, et une surface de support de l'élément de coque (54), sur laquelle la motte de beurre peut être reçue, est de 10° à 25°, de préférence environ 17°.

14. Système de beurrier (50) selon l'une des revendications 12 ou 13, dans lequel
l'élément de coque (54) présente un fond, lequel délimite vers le bas un espace de réception pour la réception de la motte de beurre, ainsi qu'une paroi (56) essentiellement périphérique se projetant depuis le fond, laquelle délimite latéralement l'espace de réception, dans lequel est prévu de préférence du côté intérieur contre la paroi (56) au moins une saillie (76), en particulier sous la forme d'une nervure (76), au moyen de laquelle saillie la motte de beurre agencée dans l'espace de réception peut être coincée
et/ou
dans lequel de préférence la paroi (56) se projette à l'oblique depuis le fond, en particulier selon un angle d'environ 93°, et/ou se rétrécit au fur et à mesure qu'elle s'éloigne du fond
et/ou
dans lequel de préférence
la paroi (56) est interrompue (78) au moins d'un côté.

15. Système de beurrier (50) selon l'une des revendications 12 à 14, dans lequel
le beurrier (52) présente une retenue (70) pour l'éplucheur à beurre (10), en particulier pour un maintien perpendiculaire de l'éplucheur à beurre (10) par rapport à l'élément de poignée (12),
dans lequel de préférence le beurrier (52), en particulier l'un des éléments de couvercle (60, 62), présente un évidement (74) du côté extérieur pour le dépôt de l'élément de lame (22), en particulier lors du maintien de l'éplucheur à beurre (10) dans la retenue (70) du beurrier (52).
